# EUROPEAN PATENT SPECIFICATION

(11) **EP 2 064 063 B1**
(45) Date of publication and mention of the grant of the patent: **23.07.2014**
(21) Application number: 07807807.8
(22) Date of filing: 14.09.2007
(51) Int. Cl.: B41J 2/01

(54) **IMAGE FORMING APPARATUS, IMAGE FORMING PROCESS AND PROGRAM**
BILDERZEUGUNGSVORRICHTUNG, BILDERZEUGUNGSVERFAHREN UND PROGRAMM
APPAREIL DE FORMATION D'IMAGE, PROCÉDÉ DE FORMATION D'IMAGE ET PROGRAMME

(30) Priority: 19.09.2006 JP 2006252046; 19.09.2006 JP 2006252053
(43) Date of publication of application: 03.06.2009
(73) Proprietor: Ricoh Company, Ltd., Tokyo 143-8555 (JP)
(72) Inventor: TAKAGI, Yasunobu, Hiratsuka-shi, Kanagawa 254-0075 (JP); HIRANO, Masanori, Atsugi-shi, Kanagawa 243-0203 (JP); HOSHINO, Yoshiaki, Kanagawa 259-1132 (JP); ITO, Takayuki, Atsugi-shi, Kanagawa 243-0013 (JP); KIMURA, Takashi, Kawasaki-shi, Kanagawa 215-0003 (JP)
(74) Representative: Leeming, John Gerard
(86) International application number: PCT/JP2007/068485
(87) International publication number: WO 2008/035790

(56) References cited:
- JP-A- 2002 166 603
- JP-A- 2004 017 546
- JP-A- 2005 053 147
- JP-A- 2005 081 565
- JP-A- 2005 225 199
- JP-A- 2005 349 606
- US-A- 5 751 310
- US-A1- 2006 098 232

## Description

### TECHNICAL FIELD

The present invention relates to an image forming apparatus, an image forming method, a recording medium, and a program.

### BACKGROUND ART

Typically, an image forming apparatus (multi-function machine), which has one or more of the functions of a printer, a facsimile machine, or a copier, forms images (image forming) by conveying a medium (hereinafter also referred to as "sheet" or "paper") and jetting a liquid (hereinafter also referred to as "recording liquid" or "ink") onto the conveyed paper by using a liquid jetting apparatus having a recording head (including one or more liquid jet heads) from which liquid (ink) droplets are ejected (jetted). It is to be noted that, although the medium is hereinafter referred to as "sheet" or "paper", the material of the medium is not to be limited only to those produced by manufacturing paper. The medium may include, for example, a paper material, a textile material, a fiber material, a fabric material, a leather material, a metal material, a plastic material, a glass material, a wood material, or a ceramic material. The medium may be, for example, a recording medium (recording paper) or a transfer material (transfer paper). It is to be noted that "image forming" has substantially the same meaning as "recording" or "printing". For example, "image forming" includes forming images having meaning (e.g. characters, figures, symbols) and also image having no particular meaning (e. g. patterns) . Furthermore, the liquid used for an image forming apparatus is not limited to a recording liquid or ink and may be other kinds of liquid as long as images can be formed with the liquid. The image forming apparatus may include, for example, a serial type image forming apparatus which forms images by scanning a liquid jet head mounted on a carriage or a line type image forming apparatus having a line type liquid jet head.

The serial type image forming apparatus has a printing speed which is determined according to conditions such as image resolution, nozzle density, dot formation driving frequency, and sub-scanning speed. Among such conditions, nozzle density is constrained by the precision in manufacturing the nozzles, the liquid chamber, the flow path, and the actuator of the liquid jet head of the image forming apparatus. Particularly, in a case where a liquid jet head uses a piezoelectric element, the only ways to separately form channels corresponding to the nozzles of the liquid jet head are to use a mechanical method (e.g., dicing) or form a thin-film PZT by printing. Accordingly, the nozzle density is relatively low compared to a thermal type liquid jet head fabricated by a semiconductor process. The upper limit of nozzle density of the piezoelectric type liquid jet head is currently approximately 360 dpi.

Meanwhile, in order to improve printing speed, it is preferable to form a printing area by scanning the liquid jet head in the main scanning direction in a single time. For example, in a case of forming an image with a resolution of 300 dpi in the sub-scanning direction by using a liquid jet head having a nozzle density of 300 dpi, it is possible to form the image by moving the liquid jet head in the main scanning direction in a single time. In a case of forming an image with a resolution of 600 dpi, the image is to be formed by using an interlace method (in this case, scanning two times in the main scanning direction and one time in the sub-scanning direction (sheet conveying direction)). Thus, it is apparent that the non-interlace method which forms an image with a single scan has a greater printing speed than the interlace method. Furthermore, as for methods of forming a single line in the main scanning direction, there are a single pass printing method that forms an image(s) by a single pass in the main scanning direction and a multi-pass printing method that forms an image (s) by plural passes in the main scanning direction. It is apparent that the single pass printing method has greater printing speed than the multi-pass printing method.

However, in a case where an image is formed by using a single pass/non-interlace method, the resolution of the image is inevitably low. In order to improve image quality in a case where resolution of the image is low, it is effective to use multiple values (multi-values) for a single pixel. As for methods of using multi-values, there is, for example, a method of changing the size of a single dot, a method of forming a single pixel by jetting plural small dots, or a method of changing the density of ink.

Although the method of acquiring high quality images by using multi-values is effective for images of pictures and photographs, no significant effects can be attained for images of graphics and characters (letters). This is due to the graphics and characters requiring a dot size large enough to fill the background areas of an image, that is, characters or graphic images become low density when small size dots are used. Therefore, binary images such as character images/graphic images face inherent problems of low resolution. Particularly, in a case where characters (letters) are expressed with binary images, the quality of the characters deteriorates such that the characters become illegible.

Besides a method of improving the nozzle density of a recording head for improving the resolution of the recording head, there is a method of assembling nozzles in a misaligned manner so that the apparent resolution will be improved. Both methods, however, cannot avoid the increase of manufacturing costs of the recording head. Furthermore, the improvement of resolution increases the workload for processing the image data and complicates the control system of the image forming apparatus, to thereby lead to an increase in the overall cost of the image forming apparatus. These problems become particularly noticeable for a recording head provided with an extended length for increasing printing speed. Furthermore, the problem of low resolution becomes more serious for a line printer since the line printer, unlike the serial printer, is unable to use the interlace method and the multi-pass method such that the printing resolution becomes fixed according to the nozzle resolution of the recording head.

Accordingly, in order to obtain satisfactory images while maintaining low manufacturing costs and high speed printing, it is important to attain a satisfactory image quality within a limited recording head resolution.

Next, the inherent low resolution problem is described in further detail. The images recorded by using a liquid jetting method are expressed by using dots formed in a matrix manner in a recording head scanning direction and in a sheet conveying direction that perpendicularly intersects the recording head scanning direction. In a case where a character (letter) is printed as a dot image, the quality of the character significantly differs depending on the resolution of the printed image. For example, in a case where a character of the same size is printed with 300 dpi and 600 dpi, the ratio in the number of dots comprising the character is approximately four times. Therefore, finer details can be expressed and character quality is higher by printing with 600 dpi. Particularly, in a case of expressing a diagonal part (slanted part) of a character, the number of dots increases/decreases in a stepwise manner according to resolution. Therefore, indentation (jaggy) becomes more noticeable when printing with 300 dpi.

As a method of reducing the jaggy appearing at the outline upon low resolution printing, there is a smoothing method referred to as anti-aliasing. The anti-aliasing method can perform smoothing with high precision since an outline can be expressed by using dots of many tones (scales). However, the anti-aliasing method is very complicated and requires a large amount of processing time. Therefore, the anti-aliasing method is not suitable for recent image forming apparatuses (e.g., inkjet printer) that are expected to provide high throughput.

Accordingly, Japanese Registered Patent No. 2886192 (published under JP H02112966 A) (hereinafter referred to as "Patent Document 1") discloses a method of comparing a bit pattern of a sample window in a character bitmap image and a predetermined bit pattern and correcting the main pixels in the sample window into small dots when the bit patterns match.

Furthermore, Japanese Registered Patent No. 3029533, published under JP H07276717 A, (hereinafter referred to as "Patent Document 2") discloses a method of determining an outline part of an image from black dot data and reducing the size of printed dots other than edge dots and black dots.

Furthermore, Japanese Laid-Open Patent Application No. 2003-334938 (hereinafter referred to as "Patent Document 3") discloses a method of reducing jaggy at an outline part by changing the size of dots of the outline part according to the inclination of the outline and forming dots at a blank part surrounding the outline part.

Furthermore, Japanese Laid-Open Patent Application No. 2004-114303 (hereinafter referred to as "Patent Document 4") discloses a method of expressing a stepwise surrounding part of the dots forming an outline part of an image by using dots smaller than the dots forming the image.

Furthermore, Japanese Laid-Open Patent Application No. 2004-017552 (hereinafter referred to as "Patent Document 5") discloses a method of performing a smoothing process using small dots when image data of a character or graphics is black and refraining from performing the smoothing process when the image data is not black.

Furthermore, Japanese Laid-Open Patent Application No. 2004-017546 (hereinafter referred to as "Patent Document 6") discloses a method of converting data so that dots of a stepwise surrounding part of the dots forming an outline part of a character or graphics are expressed as dots smaller than the dots other than those of the stepwise surrounding part and changing the data converting method according to the inclination of the outline part.

Furthermore, Japanese Laid-Open Patent Application No. 2005-193384 (hereinafter referred to as "Patent Document 7") discloses a method including a step of detecting a stepwise changing part of dots forming an outline part of a character and/or graphics on which a half tone process is performed and a step of converting dot data of the dots surrounding the stepwise changing part detected in the detection step into dot data of dots having a size no greater than those of the stepwise changing part, wherein the converting method of the data conversion step is different depending on the inclination of the outline part.

Furthermore, Japanese Laid-Open Patent Application No. 2002-166603 (hereinafter referred to as "Patent Document 8") discloses a method of obtaining the difference of density between designated pixels forming a target printing character and pixels surrounding the designated pixels, determining that the designated pixels are pixels of the outline part of the character when there are predetermined number of pixels having greater density with respect to the predetermined pixels, and coloring the determined designated pixels with a black color member comprising a mixture of a cyan, magenta, and yellow color members.

Furthermore, Japanese Registered Patent No.3244411, published under JPH 09120279 A, (hereinafter referred to as "Patent Document 9") discloses a method including a binary character image-data generation step for generating binary character image data by setting the output concentration in a pixel used as the inside of a profile configuration as a 1st concentration when the profile configuration concerned is drawn based on the outline data corresponding to the profile configuration of the character which should be output on the pixel coordinates that specify the pixel of an output unit and setting the output concentration in the pixel used as the outside of the profile configuration as a 2nd concentration different from said 1st concentration, an auxiliary line data extraction step for extracting the partial borderline which fulfills predetermined conditions as auxiliary line data from one or more partial border lines which constitute the outline data; a gradation image-data generation step for generating gradation image data by setting the output concentration of the pixel having a positional relationship fulfilling a predetermined criteria with respect to the drawn partial borderline as the 3rd concentration existing in the middle of the 1st and 2nd concentration when the partial borderline corresponding to the auxiliary line data is drawn on the pixel coordinate, and a compositing step for generating a character image data by compositing binary character image data and gradation image data.

The methods disclosed in Patent Documents 1 and 2 are effective for LED printers and laser printers. Since the particle diameter of the toner used by the LED printers and laser printers is no greater than 10 *µ*m, the LED printers and laser printers hardly exhibit ink spreading on plain paper and are able to form small dots as designated. Furthermore, the LED printers and laser printers can form dots of designated sizes at optimum locations by slightly adjusting the laser irradiation position and the laser irradiation length.

However, a liquid jet type image forming apparatus exhibits greater ink spreading compared to a laser printer. Furthermore, since the liquid jet type image forming apparatus, which changes dot size by modifying the number or length of the drive pulses in a drive period, requires more time to form dots compared to LED printers and laser printers, it is difficult for the liquid jet type image forming apparatus to change the dot size into many different types. That is, the liquid jet type image forming apparatus can change dots to only a few different sizes. Due to a similar reason, the dots of the liquid jet type image forming apparatus are formed in a substantially fixed location (position) inside a single pixel. That is, unlike the LED printer or the laser printer, it is difficult for the liquid jet type image forming apparatus to freely change the dot formation location (position) inside a single pixel.

As described above, although there are various methods for performing outline correction by using dots of different sizes, the sizes of the dots are limited to more or less than three types even for a multi-value printer capable of forming dots of different sizes. Furthermore, the types of dot size that can be used for correction could be further limited depending on, for example, character correction, covered area of the medium (paper), or gradation property. Furthermore, since dots are formed at the center of (the address of) each pixel determined by printing resolution, correction might not be satisfactorily achieved. Moreover, in a case where small dots are used for reducing brightness, spaces are easily formed between the character framework and the correcting dot. Such space or deviation may degrade the quality of a character.

Furthermore, although outline correction can be performed by changing density with use of composite black, the amount of ink adhered on a single pixel increases due to composite black being created by blending cyan (C), magenta (M), and yellow (Y) ink. This causes bleeding of ink, particularly, when plain paper is used and results to degradation of image quality. Furthermore, the increase in the amount of ink also increases the time required for drying (reduction of productivity) and also raises ink cost. Furthermore, undesired color areas may be formed in a case where a target impact position for one color ink deviates from a target impact position of another color ink. This also becomes a cause for degrading the quality of a character. Since the kinds of ink that can be mounted in a typical inkjet recording apparatus are approximately four to eight colors, the color that can express black is generally limited to K (K pigment, K dye, or light black) and a CMY composite. Therefore, little variation can be made in the density of ink. In addition, correction of color characters is difficult (similar color ink of different density is required).

From another aspect, although the above-described Patent Document 3 discloses an inkjet recording method capable of reducing jaggy by changing dot size, the changing of dot sizes may cause dots to be formed at undesired positions on a medium. This problem is described in detail below.

A liquid jet head used in a liquid jet type image forming apparatus includes a pressure generating part for applying pressure to a liquid (ink) inside a liquid chamber. For example, the pressure generating part may be a thermal type head using a thermal type head which uses a heating resistor for generating bubbles or a piezoelectric type head which uses a piezoelectric element (electromechanical transducer) for changing the wall of the liquid chamber. In order to change the dot diameter, it is common to use a method of changing the energy applied to the pressure generating part. For example, this method may be changing the driving voltage of the pressure generating part, changing the pulse width of the drive pulse, or changing the pulse number of the drive pulse.

Among these methods, the method of changing the drive voltage requires different signals corresponding to different drive voltages and plural switching parts for selectively switching for each channel corresponding to different drive voltages. Thereby, the driving element (driver IC) becomes larger in correspondence with the increase in the types of drive voltages. In a case of controlling (changing) pulse width or number of pulses, the pulse width and number of pulses can be changed by controlling the switching part based on time. In this case, a single switching part for each channel would be needed. Such pulse width modulation method or pulse number modulation method are used particularly by an image forming apparatus using a piezoelectric head.

However, the amount of ink differs depending on the pulse width modulation method or the pulse number modulation method. That is, in forming ink droplets having different dot diameter, since the length of the drive pulse is different, the timing for jetting ink droplets (jet upon end of drive pulse) in accordance with the drive pulse is different even if the timing of the start of the rise of the meniscus is the same upon input of the drive pulse. Accordingly, the time for the droplets to reach the medium surface is different. As a result, the dot formation area on the medium differs depending on the dot size. Thus, even in a case of attempting to improve image quality by replacing (correcting) the dots at the outline part with small dots, it is difficult to provide satisfactory images since the small dots cannot be formed at desired areas of the medium. Furthermore, the deviation of dot formation position is also caused by viscosity resistance of ink due to ambient conditions (e.g., temperature, humidity). Furthermore, the deviation of dot formation location differs depending on image formation conditions (e.g., type of paper, resolution).

US 2006/098232 A1 discloses an image processing method and apparatus according to the preamble of claims 2 and 1 respectively, in which dots forming a step-change part of an outline of an image of characters and/or graphics, which image is subjected to half-tone processing, are detected, and dots surrounding the detected dots forming the step-change part are transformed into respective dot data each having a size that is smaller than a size of the detected dots forming the step-change part. In an embodiment, one of different transformation methods is selected according to an inclination of the outline in order to produce the dot data in the transforming.

US 5 751 310 A discloses a method in which, in image recording by discharging plural inks of different characteristics onto a recording medium, recording pixels to be recorded by at least one of the inks of either yellow, magenta or cyan color subjected to pixel expansion are expanded in four directions, then a logic product is calculated between the expanded pixels and the pixels to be recorded with an ink which is black not subjected to pixel expansion, and the recording pixels to be recorded by the ink which is black not subjected to pixel expansion are replaced by pixels formed by the inks (Y, M, C) subjected to pixel expansion.

JP 2005 053147 A discloses a method for edge processing for ink jet printing in which color drift of an achromatic edge part is reduced. There is disclosed an image processing method for ink dot printing using a plurality of kinds of inks including an achromatic ink and a chromatic ink comprising a process (a) for detecting the edge part existing in an object image, and a process (b) for generating dot data which indicate recording states of dots of the plurality of kinds of inks, in terms of each printing pixel of the object image. The process (b) includes a step for performing the edge processing for generating the dot data so that the ratio of the discharge of the achromatic ink can be higher in the achromatic edge part than in a non-edge part of the same color. The ratio of the discharge of each ink can be changed, for example, by selectively using a color-conversion look-up table for an edge and a color-conversion look-up table for a non-edge.

The scope of the invention is defined in the appended claims.

### BRIEF DESCRIPTION OF DRAWINGS

Fig. 1 is a side view for describing an overall configuration of an image forming apparatus including a program for performing an image forming method according to an embodiment of the present invention;
Fig.2 is a plan view of an image forming apparatus according to an embodiment of the present invention;
Fig.3 is a cross-sectional view along a longitudinal direction of a liquid chamber of a recording head according to an embodiment of the present invention;
Fig.4 is a cross-sectional view along a lateral direction of the liquid chamber of the recording head according to an embodiment of the present invention;
Fig.5 is a block diagram showing a control part of an image forming apparatus according to an embodiment of the present invention;
Fig.6 is a block diagram showing an example of a printing control part of an image forming apparatus according to an embodiment of the present invention:
Fig.7 is a schematic diagram for describing an example of a drive waveform generated and output by a drive waveform generating part of a printing control part according to an embodiment of the present invention;
Fig.8 is a schematic diagram for describing drive signals for a small droplet, a medium droplet, a large droplet, a fine drive selected according to a drive waveform according to an embodiment of the present invention;
Fig.9 is a schematic diagram for describing differences of output characters due to different resolution;
Fig.10 is a schematic diagram for describing an example of performing jaggy correction (outline correction) according to an embodiment of the present invention;
Fig.11 is a flowchart for describing an outline correction process (method) according to an embodiment of the present invention;
Fig.12 is an exemplary table used for assigning correction patterns according to printing mode/resolution according to an embodiment of the present invention;
Fig.13 is a schematic diagram for describing an outline correction process (method) using a correction pattern according to an embodiment of the present invention;
Fig. 14 is a schematic diagram for describing jaggy correction (outline correction) where dot formation position is changed according to an embodiment of the present invention;
Fig.15 is a schematic diagram for describing an example of performing jaggy correction (outline correction) according to an embodiment of the present invention;
Fig. 16 is a schematic diagram for describing a state before outline correction, the result of outline correction when there is no deviation of dot formation position, and the result of outline correction when there is deviation of dot formation position;
Fig. 17 is a schematic diagram for describing an outline corrected character in a case where there is no deviation of dot formation position and a case where there is deviation of dot formation position;
Fig. 18 is a schematic diagram for describing a case of applying a correction pattern according to an embodiment of the present invention;
Fig.19 is a flowchart for describing a process (method) for controlling an outline correction process (method) according to an embodiment of the present invention; and
Fig.20 is an exemplary table used for selection of correction patterns according to an embodiment of the present invention.

### BEST MODE FOR CARRYING OUT THE INVENTION

The present invention is described in detail based on the embodiments illustrated in the drawings.

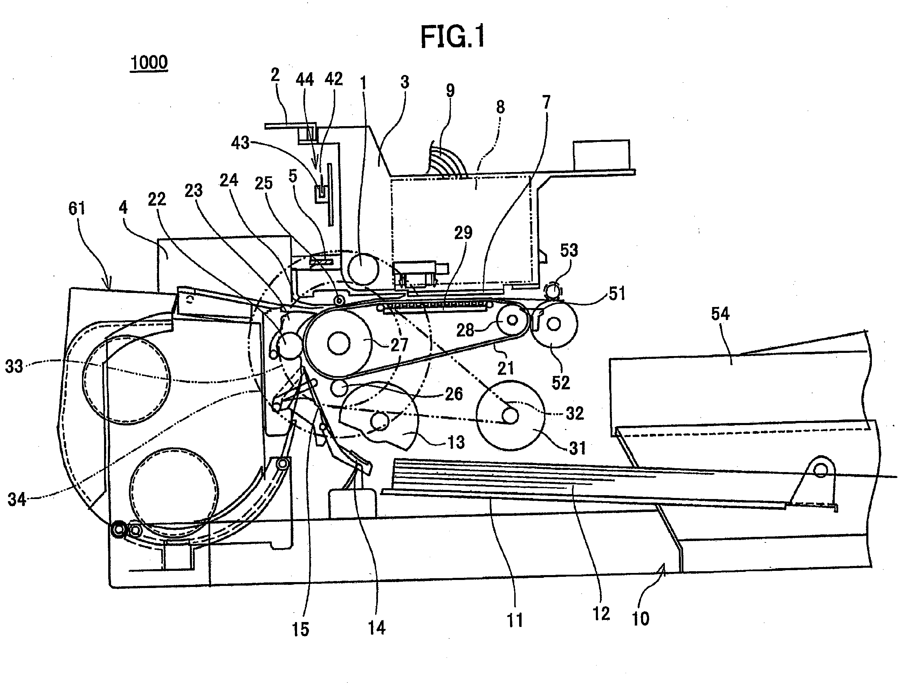

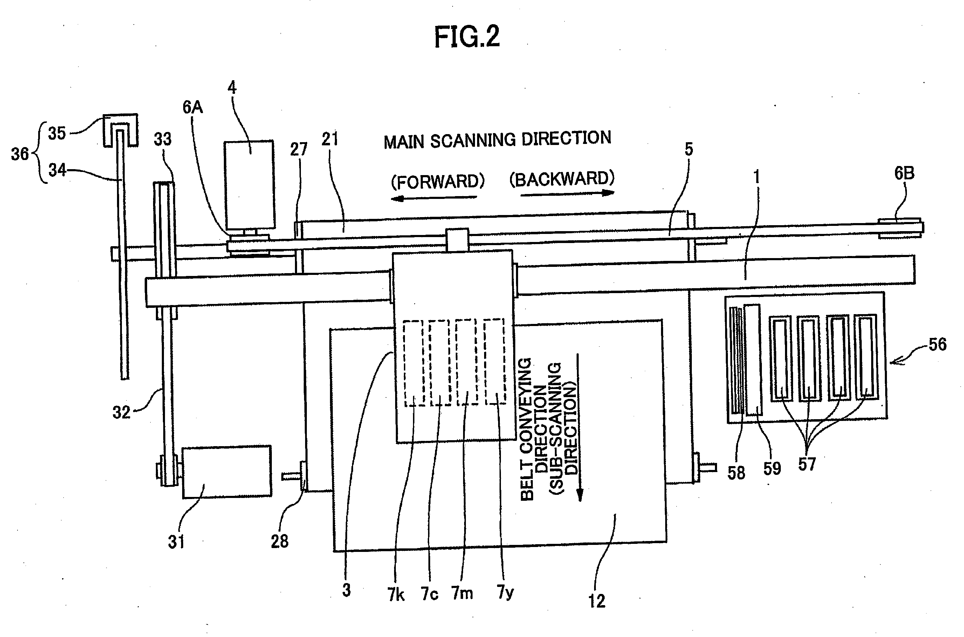

First, an exemplary image forming apparatus 1000 is below with reference to Figs. 1 and 2, where Fig. 1 is a side view and Fig. 2 is a plan view of the image forming apparatus 1000.

The illustrated image forming apparatus 1000 has guide members including a guide rod 1 and a guide rail 2. The guide rod 1 and the guide rail 2 are mounted in traversed positions between left and right side boards (not shown) of the image forming apparatus. The guide rod 1 and the guide rail 2 hold a carriage 3 so that the carriage 3 can slide in the main scanning direction. A main scanning motor 4 drives the sliding movement of the carriage 3 via a timing belt 5 stretched between a driving pulley 6A and a driven pulley 6B. Thereby, the carriage 3 is able to travel (scan) in the arrow directions shown in Fig.2 (main scanning direction).

The carriage 3 has a recording head (liquid jetting head) 7 including, for example, four recording head parts 7y, 7c, 7m, and 7k for jetting ink droplets of yellow (Y), cyan (C), magenta (M), and black (K), respectively. The recording head 7 having plural ink jetting holes aligned in a direction perpendicular to the main scanning direction is attached to the carriage 3 so that ink droplets can be jetted downward therefrom.

The recording head 7 may include a pressure generating part that generates pressure used for jetting ink droplets from the recording head 7. For example, the pressure generating part may be a thermal actuator which utilizes the pressure changes of ink boiled by an electric heat converting element (e.g. heating resistor), a shape-memory alloy actuator which utilizes the changes of shape of an alloy in accordance with temperature, or an electrostatic actuator utilizing static electricity.

Furthermore, the recording head 7 is not limited to having plural recording head parts corresponding to each color. For example, the recording head 7 may have plural ink jetting nozzles for jetting ink of plural colors.

The carriage 3 also has a sub-tank 8 for supplying ink of each color to the recording head 7. The sub-tank 8 is supplied with ink from a main tank (i. e. ink cartridge, not shown) via an ink supplying tube(s) 9.

The image forming apparatus also includes a sheet feeding portion for feeding sheets of paper 12 stacked on a sheet stacking part 11 of a sheet feed cassette 10. The sheet feeding portion includes a separating pad 14 having a friction coefficient sufficient for separating sheets of paper 12 from the sheet stacking part and a sheet feeding roller 13 (in this example, a half moon shaped roller) for conveying the sheets of paper 12 one at a time from the sheet stacking part 11. The separating pad 14 is configured to urge the sheets in the direction toward the sheet feeding roller 13.

The paper 12 conveyed from the sheet feeding part is conveyed to an area below the recording head 7. In order to convey the paper 12 to the area below the recording head 7, the image forming apparatus is provided with a conveyor belt 21 that conveys the paper 12 by attracting the paper 12 with electrostatic force; a counter roller 22 and the conveyor belt 21 having the paper 12 delivered inbetween after receiving the paper 12 conveyed from the sheet feeding part via a guide 15; a conveyor belt guide 23 for placing the paper 12 flat on the conveyor belt 21 by changing the orientation of the paper 12 conveyed in a substantially upright (perpendicular) position by an angle of approximately 90 degrees; and a pressing member 24 for pressing a pressing roller 25 against the conveyor belt 21. Furthermore, the image forming apparatus includes a charging roller (charging part) 26 for charging the surface of the conveyor belt 21.

In this example, the conveyor belt 21 is an endless belt stretched between a conveyor roller 27 and a tension roller 28. A sub-scanning motor 31 rotates the conveyor roller 27 via a timing belt 21 and a timing roller 33 so that the conveyor belt 21 is rotated in the belt conveying direction shown in Fig.2 (sub-scanning direction). It is to be noted that a guide member 29 is positioned at the backside of the conveyor belt 21 in correspondence with a target image forming area of the recording head 7. Furthermore, the charging roller 26 is positioned contacting the top surface of the conveyor belt 21 so that the charging roller 26 rotates in accordance with the rotation of the conveyor belt 21.

As shown in Fig.2, the image forming apparatus also includes a rotary encoder 36. The rotary encoder 36 includes a slit disk 34 attached to a rotary shaft of the conveyor roller 27 and a sensor 35 for detecting a slit (s) formed in the slit disk 34.

The image forming apparatus also includes a sheet discharging portion for discharging the sheet of paper 12 onto which data are recorded by the recording head 7. The sheet discharging portion includes a separating claw 51 for separating the paper 12 from the conveyor belt 21, a first sheet discharging roller 53, a second sheet discharging roller 53, and a sheet discharge tray 54 for stacking the paper(s) 12 thereon.

Furthermore, a double-side sheet feeding unit (not shown) may be detachably attached to a rear portion of the image forming apparatus. By rotating the conveyor belt in the reverse direction, the paper 12 is delivered to the double-side sheet feeding unit so as to have the paper 12 flipped upside down. Then, the flipped paper 12 is conveyed back to the part between the counter roller 22 and the conveyor belt 21.

Furthermore, as shown in Fig.2, a nozzle recovery mechanism 56 for maintaining/restoring the operating status of the nozzle (s) may be provided at a non-printing area toward one side (in this example, toward the back side) of the main scanning direction of the carriage 3.

The nozzle recovery mechanism 56 includes, for example, plural caps 57 for covering the surface of each of the nozzles of the recording head 7, a wiper blade 58 for wiping off residual ink from the surface of the nozzles, and an ink receptacle 59 for receiving accumulated ink that is jetted in a process of disposing of undesired ink.

Accordingly, with the image forming apparatus having the above-described configuration, sheets of paper 12 are separated and conveyed sheet by sheet from the sheet feeding part, then the separated conveyed paper 12 is guided to the part between the conveyor belt 21 and the counter roller 22 in an upright manner by the guide 15, and then the orientation of the conveyed paper is changed approximately 90 degrees by guiding the tip part of the paper with the conveyor guide 23 and pressing the paper 12 against the conveyor belt 21 with the pressing roller 25.

In this conveying operation, an AC bias supplying part of a control part (not shown) of the image forming apparatus alternately applies negative and positive alternate voltages to the charging roller 26 in accordance with an alternate charging pattern. Thereby, the conveyor belt 21 is alternately charged with negative and positive voltages at intervals of a predetermined width in accordance with the alternate charging pattern. When the paper 12 is conveyed onto the charged conveyor belt 21, the paper 12 is attracted to the conveyor belt 21 by electrostatic force. Thus held, the paper 12 is conveyed in the sub-scanning direction by the rotation of the conveyor belt 21.

Then, the recording head 7 jets ink droplets onto the paper 12 while the paper 12 is being moved in correspondence with the forward and backward movement of the carriage 3. After the recording head 7 records (prints) a single row by jetting ink in accordance with image signals, the paper 12 is further conveyed a predetermined distance for recording the next row. The recording operation of the recording head 7 is completed when a signal is received indicative of the completion of the recording operation or indicative of the rear end of the paper 12 reaching the edge of the recording area. After the completion of the recording operation, the paper is discharged to the discharge tray 54.

In a case of conducting double side printing, the paper 12 is flipped upside down after the recording of the front side (the side which is printed first) of the paper 12 is completed. The paper 12 is flipped so that the back side of the paper is the printing surface by rotating the conveyor belt 21 in reverse and delivering the paper 12 to the double side sheet feeding unit (not shown). Then, the flipped paper 12 is conveyed to the part between the counter roller 22 and the conveyor belt 21. After the paper 12 is placed on the conveyor belt 21, the recording head 7 conducts the above-described recording operation on the back side of the paper 12. After the recording operation is completed, the paper 12 is discharged to the discharge tray 54.

In a case where the image forming apparatus is standing by to conduct a printing (recording) operation, the carriage 3 is moved toward the recovery mechanism 56. The cap 57 covers the nozzle side of the recording head 7 to keep the nozzles moist. This prevents poor jetting performance caused by dried ink. Furthermore, where the cap covers the nozzle side of the recording head 7, a recovery operation may be performed by suctioning accumulated viscous ink (recording liquid) from the nozzles and ejecting the ink and bubbles. Then, the wiper blade 58 wipes off the ink that has adhered to the nozzle side of the recording head 7 during the recovery operation. Furthermore, an empty jetting (idling) operation that is irrelevant to a printing operation may be performed in which ink is jetted, for example, prior to a recording operation or during the recording operation.

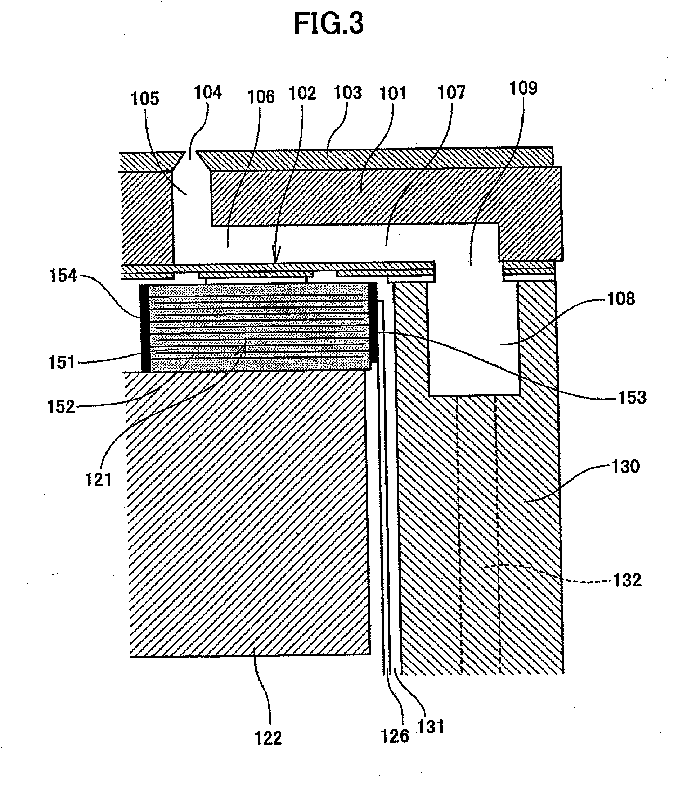

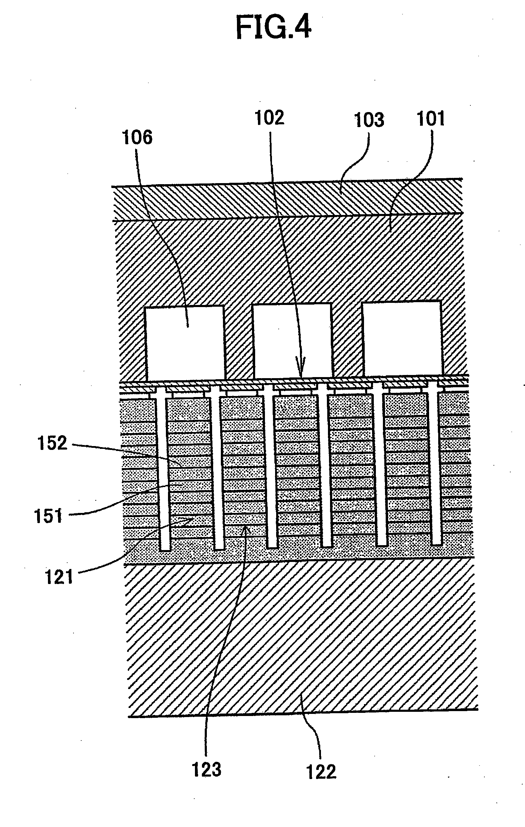

Next, an example of a recording head part included in the recording head 7 is described with reference to Figs. 3 and 4. Fig. 3 is a cross-sectional view along a longitudinal direction of a liquid chamber of the recording head 7. Fig.4 is a cross-sectional view along a lateral direction of the liquid chamber of the recording head 7.

The recording head 7 includes a layered structure formed by bonding together a flow plate 101 (for example, formed by performing anisotropic etching on a single crystal silicon substrate), a vibration plate 102 (for example, formed by performing electroforming on a nickel plate) provided on a lower surface of the flow plate 101, and a nozzle communication path 103 provided on an upper surface of the flow plate 101. This layered structure is formed with, for example, a nozzle communication path 105 in flow communication with the nozzle (s) 104 of the recording head 7, a liquid chamber 106 serving as a pressure generating chamber, a common liquid chamber 108 for supplying ink to the liquid chamber 106 via a fluid resistance part (supply path) 107, and an ink supply port 109 in flow communication with the common liquid chamber 108.

Furthermore, the recording head 7 includes two rows (although only one row is illustrated in Fig.3) of layered structure type piezoelectric elements (also referred to as "pressure generating part" or "actuator part") 121 for applying pressure to the ink inside the liquid chamber 106 by deforming the vibration plate 102, and a base substrate 122 affixed to the piezoelectric elements 121. It is to be noted that plural pillar parts 123 are formed in-between the piezoelectric elements 121. Although the pillar parts 123 are formed at the same time of forming the piezoelectric elements 121 when cutting a base material of the piezoelectric element 121, the pillar parts 123 simply become normal pillars since no drive voltage is applied thereto.

Furthermore, the piezoelectric element 121 is connected to an FPC cable 126 on which a driving circuit (driving IC, not shown) is mounted.

The peripheral portions of the vibration plate 102A are bonded to a frame member 130. The frame member 130 is fabricated to form a void portion 131 for installing an actuator unit (including, for example, the piezoelectric element 121, the base substrate 122) therein, a concave part including the common liquid chamber 108, and an ink supply hole 132 for supplying ink from the outside to the common liquid chamber 108. The frame member 130 is fabricated by injection molding with use of, for example, a thermal setting resin (e.g. epoxy type resin) or polyphenylene sulfate.

The flow plate 101 is fabricated to form various concave parts and hole parts including the nozzle communication path 105 and the liquid chamber 106. The flow plate 101 is fabricated, for example, by using an anisotropic etching method in which an alkali type etching liquid (e.g. potassium hydroxide, KOH) is applied to a single crystal silicon substrate having a crystal plane orientation of (110). It is however to be noted that other materials may be used for fabricating the flow substrate 101 besides a single crystal silicon substrate. For example, a stainless steel substrate or a photosensitive resin may also be used.

The vibration plate 102 is fabricated, for example, by performing an electroforming method on a metal plate formed of nickel. It is however to be noted that other metal plates or a bonded member formed by bonding together a metal plate and a resin plate may also be used. The piezoelectric elements 121 and the pillar parts 123, and the frame member 130 are bonded to the vibration plate 102 by using an adhesive agent.

The nozzle plate 103 is formed with nozzles 104 having diameters ranging from 10 µm - 30 µm in correspondence with the sizes of respective liquid chambers 106. The nozzle plate 103 is bonded to the flow plate 101 by using an adhesive agent. The nozzle plate 103 includes, for example, a metal material member having a water repellent layer formed on its outermost surface.

The piezoelectric element (in this example, PZT) 121 has a layered structure in which piezoelectric material 151 and internal electrodes 152 are alternately layered on top of one another. The internal electrodes 152, which are alternately extended to the side edge planes of the piezoelectric element 121, are connected to an independent electrode 153 and a common electrode 154. In this example, the pressure is applied to the ink in the liquid chamber 106 by using a piezoelectric constant d33 material for the piezoelectric material 151. It is however to be noted that pressure may also be applied to the ink in the liquid chamber 106 by using a piezoelectric constant d31 material for the piezoelectric material 151. Furthermore, a single row of piezoelectric elements 121 may be provided in correspondence with a single base substrate 121.

Accordingly, in a case of jetting ink (recording liquid) from the nozzles 104 of the above-described recording head 7, the piezoelectric element 121 is contracted by lowering the voltage applied to the piezoelectric element 121 to a voltage below a reference electric potential. Thereby, the volume of the liquid chamber 106 increases as the vibration plate 102 is lowered in correspondence with the contraction of the piezoelectric element 121. Then, ink flows into the liquid chamber 106. Then, the voltage applied to the piezoelectric element is raised so that the piezoelectric element 121 expands in the layered direction of the piezoelectric element 121. Thereby, the volume of the liquid chamber 106 decreases as the vibration plate 102 deforms in a manner protruding toward the nozzle 104 in correspondence with the expansion of the piezoelectric element 121. As a result, pressure is applied to the ink inside the liquid chamber 106, thereby jetting ink out from the nozzle 104.

Then, the position of the vibration plate 102 returns to its original position by lowering the voltage applied to the piezoelectric element 121 to the reference electric potential. As the vibration plate 102 returns to the original position, the liquid chamber 106 expands to create a negative pressure in the liquid chamber 106. The negative pressure in the liquid chamber 106 allows ink to be supplied into the liquid chamber 106 from the common liquid chamber 108. The recording operation of the recording head 7 moves on to the next ink jetting process after the vibration of the meniscus face of the nozzle 104 attenuates and becomes stable.

It is to be noted that the method of driving the recording head 7 is not limited to the above-described example (pull/push method). For example, a pull method or a push method may be employed by controlling the drive waveform applied to the recording head 7.

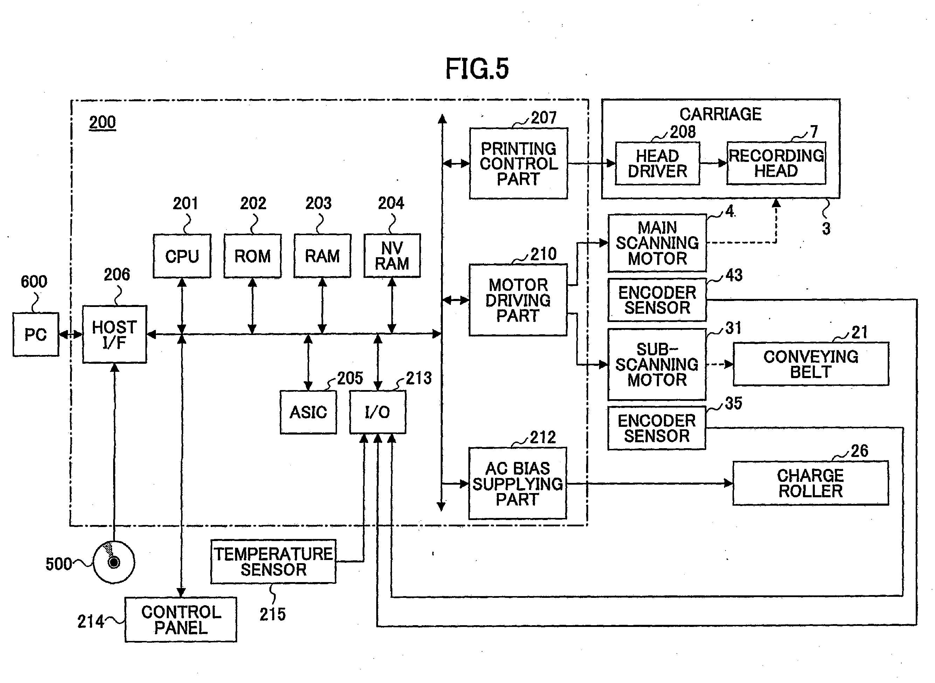

Next, an example of a control part 200 of the image forming apparatus is described with reference to Fig.5.

The control part 200 of FIG. 5 includes, for example, a CPU 201 for overall control (including control of correction of contour parts (jaggy correction)) of the image forming apparatus, a ROM 202 for storing programs and data installed via a computer-readable recording medium 500 for execution by the CPU 201, a RAM for temporarily storing image data and the like, a rewritable non-volatile memory 204 for maintaining data when the power of the image forming apparatus is turned off, and an ASIC 205 for processing various signals corresponding to image data, input/output signals for performing image processing (e.g., image sorting), and controlling various parts of the image forming apparatus.

The control part 200 further includes, for example, an I/F 206 for exchanging data and signals with the host, a printing control part 207 including a data transfer part and a drive waveform generating part for controlling the recording head 7, a head driver (driver IC) 208 for driving the recording head 7 provided on the carriage 3, a motor driving part 210 for driving the main scanning motor 4 and the sub-scanning motor 31, an AC bias supply part 212 for supplying AC bias to the charge roller 34, and an I/O 213 for receiving various detection signals from the encoder sensors 43, 35, the temperature sensor 215, and other sensors.

The control part 200 is connected to a control panel 214 for inputting data to the image forming apparatus and displaying data.

The control part 200 receives data such as image data from the host side at the I/F 206 via a cable or a network (e.g., the Internet). The host side is connected to, for example, an information processing apparatus (e.g., a personal computer (PC)) 600, an image reading apparatus (e.g., an image scanner) and/or a photographing apparatus (e.g., a digital camera).

The CPU 201 of the control part 200 reads out and analyzes the image data (printing data) stored in a reception buffer of the I/F 206. Then, the ASIC 205 performs various processes on the image data such as image processing and data rearrangement. Then, the processed image data are transferred from the printing control part (head drive control part) 207 to the head driver 208. It is to be noted that the generation of dot patterns for outputting images is conducted in the printer driver of the host side (described below).

The printing control part 207 transfers image data in the form of serial data to the head driver 208. In addition, the printing control part 207 outputs transfer clocks (required for transferring the image data), latch signals, and droplet control signals (mask signals) to the head driver 208. The printing control part 207 has a drive waveform generating part including a D/A converter for performing D/A conversion on pattern data of drive signals stored in the ROM 202 and a drive waveform selecting part for selecting the waveform to be output to the head driver 208. Accordingly, the printing control part 207 generates drive waveforms including one or more drive pulses (drive signals) and outputs the drive waveforms to the head driver 208.

The head driver 208 applies drive signals included in the waveforms output from the printing control part 207 to a driving element (e.g. the above-described piezoelectric element 121). The driving element generates energy for enabling ink droplets to be selectively jetted from the recording head 7. The head driver 208 applies the drive signals based on serially input image data corresponding to a single line of the recording head 7. By selecting the drive pulse included in the drive waveform, ink droplets of different sizes including large droplets (large dots), medium droplets (medium dots), and small droplets (small dots) can be jetted from the recording head 7.

The CPU 201 calculates the drive output value (control value) for controlling the main scanning motor 4 and drives the main scanning motor 4 via the motor driving part 210 in accordance with the calculated value. The calculation of the CPU 201 is based on the detected speed value and the detected position value obtained by sampling the detection pulses of the encoder sensor 43 (i. e. linear encoder) and the target speed value and the target position value stored beforehand in a speed/position profile.

In the same manner, the CPU 201 calculates the drive output value (control value) for controlling the sub-scanning motor 31 and drives the sub-scanning motor 31 via the motor driving part 210 in accordance with the calculated value. The calculation of the CPU 201 is based on the detected speed value and the detected position value obtained by sampling the detection pulses of the encoder sensor 35 (i.e. rotary encoder) and the target speed value and the target position value stored beforehand in a speed/position profile.

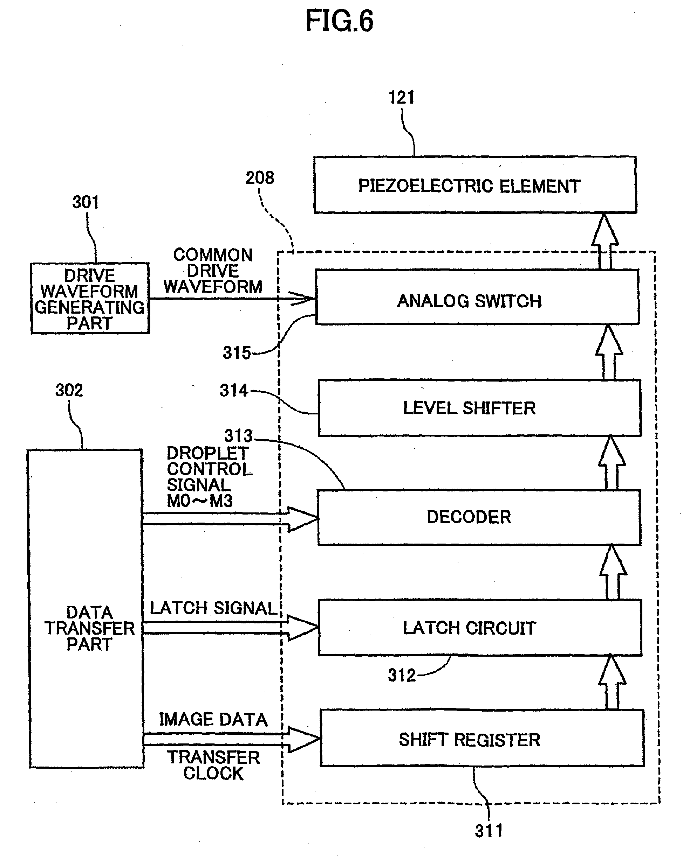

Next, examples of the printing control part 207 and the head driver 208 are described with reference to Fig.6.

As described above, the printing control part 207 has a drive waveform generating part 301 for generating a drive waveform including plural drive pulses (drive signals) and outputting the drive waveform in a single printing cycle and a data transfer part for outputting two bit image data corresponding to the output (print) image (gradation signal 0, 1), latch signals (LAT), and droplet control signals M0-M3.

The droplet control signal is a two bit signal for instructing opening and closing of an analog switch (switching part) of the head driver 208 with respect to each droplet. In correspondence with the printing period of a common drive waveform, the droplet control signal makes a state-transition to an H level (ON) with respect to a selected waveform and makes a state-transition to a L level (OFF) with respect to a non-selected waveform.

The head driver 208 includes a shift register 311 for inputting transfer clocks (shift clocks) and serial image data (gradation data: two bit/CH) from the data transfer part 302, a latch circuit 312 for latching each resistance value of the shift register 311 with latch signals, a decoder 313 for decoding the gradation data and the droplet control signals MO-M3 and outputting the decoding results, a level shifter 314 for converting the level of the logic level voltage signal of the decoder 313 into a level operable for an analog switch 315, and the analog switch 315 for switching on and off (open/close) according to the output of the decoder 313 via the level shifter 314.

The analog switch 315 is connected to a selection electrode (independent electrode) 153 of each piezoelectric element 121 for receiving a common drive waveform from the drive waveform generating part 301. Therefore, in accordance with the results of decoding the serially transferred image data (gradation data) and the droplet control signals MNO-MN3 by the decoder 313, the analog switch 315 is switched on, to thereby allow a predetermined drive signal of the common drive waveform to pass through (to be selected) and applied to the piezoelectric element 121.

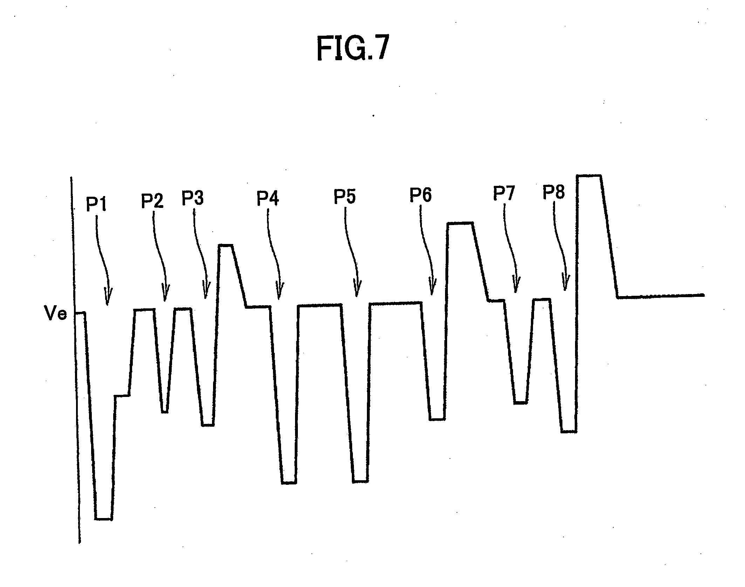

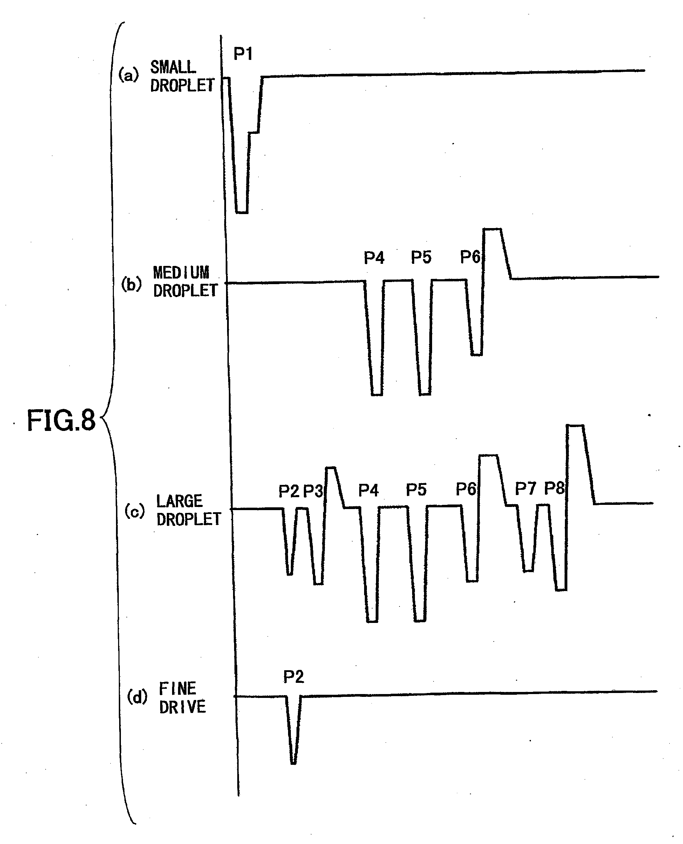

Next, examples of a drive waveform are described with reference to Figs.7 and 8.

As shown in Fig. 7, the drive waveform generating part 301 generates a drive signal (drive waveform) including eight drive pulses P1-P8 in a single printing period (one drive period) . The drive pulses P1-P8 include, for example, a waveform element dropping from a reference electric potential Ve and a waveform element rising from the dropped state. The drive pulse to be used is selected according to the droplet control signals MO-M3 from the data transfer part 302.

The waveform element of a drive pulse having a potential V dropping from the reference electric potential Ve corresponds to a pulling waveform element for causing the piezoelectric element 121 to contract and increase the volume of the liquid chamber 106. The waveform element of a drive pulse rising from a dropped state corresponds to a pushing waveform element for causing the piezoelectric element 121 to expand and reduce the volume of the liquid chamber 106.

Furthermore, in accordance with the droplet control signals M0-M3 from the data transfer part 302, the drive pulse P1 is selected in a case of forming a small-sized droplet (small dot) (See (a) of Fig.8), the drive pulses P4-P6 are selected in a case of forming medium-sized droplets (medium dots) (See (b) of Fig. 8), the drive pulses P2-P8 are selected in a case of forming large-sized droplets (large dots) (See (c) of Fig.8), and drive pulse P2 is selected in a case of performing fine driving (vibration of meniscus with no jetting of droplets). Accordingly, the selected drive pulses are applied to the piezoelectric element 121 of the recording head 7.

In a case of forming a medium droplet (medium dot), a first droplet is jetted at the drive pulse P4, a second droplet is jetted at the drive pulse P5, and a third droplet is jetted at the drive pulse P6. The jetted first, second, and third droplets are combined during flight and make impact on the medium as a single droplet. In this case, when the inherent vibration period of the pressure chamber (liquid chamber 106) is represented as "Tc", the interval of the jetting timing between the drive pulse P4 and P5 is preferably " 2Tc ± 0.5 *µ*s. Since the drive pulses P4 and P5 have a simple pulling waveform element, the ink droplet speed of the third droplet will become too fast if the drive pulse P6 is also provided with a simple pulling waveform element. This could cause the impact location of the droplet to deviate from the impact location of the other droplets. Therefore, by reducing the pulling voltage (reducing drop of electric potential) for the drive pulse P6, the pulling of meniscus can be reduced, to thereby restrain the ink droplet speed of third droplet. However, the rise voltage is not to be reduced for saving necessary ink droplet volume.

In other words, by relatively reducing the pull voltage for the last drive pulse in a set of drive pulses, the jetting speed corresponding to the last drive pulse can be relatively reduced. Accordingly, the impact location of the last droplet can be matched with the impact locations of the other droplets.

The fine drive pulse P2 has a drive waveform for vibrating the meniscus of a nozzle without jetting ink droplets so that the meniscus of the nozzle can be prevented from drying. The fine drive pulse P2 is applied to the recording head 7 for a non-printing area of a medium. By using the drive pulse P2 having a fine waveform as one of the drive pulses for forming a large droplet, the drive period can be shortened (accelerated).

By setting the interval of the jetting timing between the fine drive pulse P2 and the drive pulse P3 within a range of ± 0.5 *µ*s with respect to the inherent vibration period "Tc", the volume of ink droplet jetted by the drive pulse P3 can be gained (increased). That is, by overlapping (supplementing) the expansion of the pressure chamber 6 from the drive pulse P3 with the pressure vibration of the vibration period in the pressure chamber from the drive pulse P2, the volume of the liquid droplet jetted at the drive pulse P3 is greater compared to the volume of the liquid droplet jetted by the drive pulse P3 alone.

Next, an exemplary operation of performing outline correction of an image with the above-described image forming apparatus is described.

### [First Example]

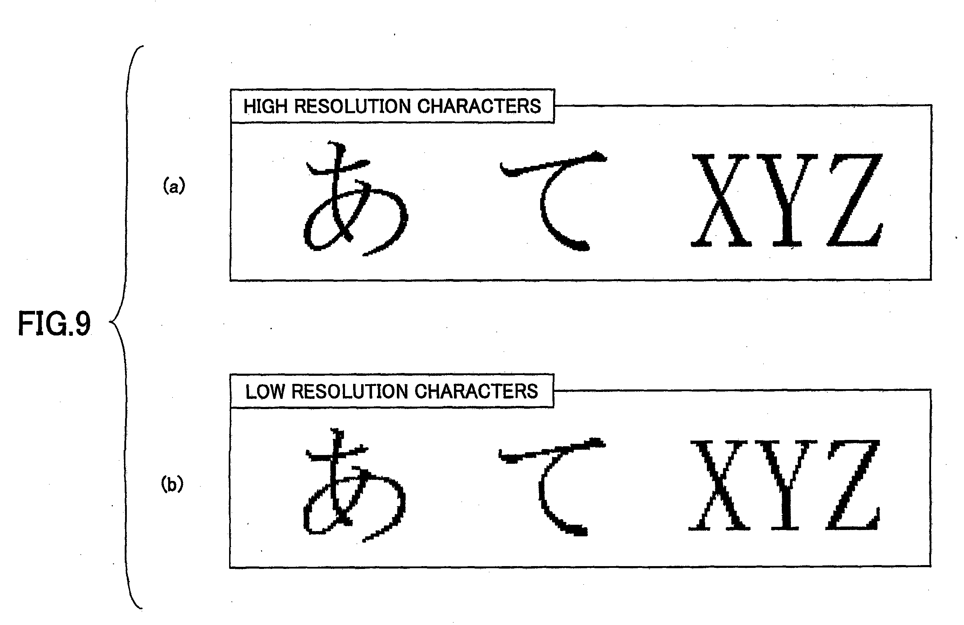

A liquid jet type image forming apparatus 1000 exhibits jagged areas at a diagonal part of an outline of an image since the dots formed in the diagonal part by the image forming apparatus 1000 are arranged in a stepwise manner. As shown in (a) of Fig. 9, jagged areas are hardly recognizable in a case where characters are printed in high resolution. However, as shown in (b) of Fig. 9, significant jagged areas (jaggy) clearly appear and character quality is poor in a case where characters are printed in an insufficiently low resolution. As described above, exemplary methods for reducing (correcting) the jagged areas include using dots smaller than other dots to form the outline part or adding new dots to empty spaces in the outline part. However, the method of using dots smaller than other dots at the outline part cannot be used as the correcting method in a case of forming an image with binary values, in other words, forming an image by printing or not printing a dot(s) (one type of dot size).

Meanwhile, in a case of using recording liquid (ink) of four colors (black (K), cyan (C), magenta (M), yellow (Y)), a composite black dot of C, M, Y can be formed by jetting ink droplets of C, M, and Y onto the same impact location. It is known that a dot printed with the composite black ink has a greater brightness than a dot printed with black (K) ink alone. Furthermore, another composite black dot of C, M, Y, and K having lesser brightness can be printed by jetting ink droplets of C, M, Y, and K onto the same impact location.

Accordingly, by compositing (combining) ink of different colors, black dots having different brightnesses can be used to reduce jagged areas at an outline part of, for example, a black character.

Furthermore, in a case where a color ink besides those of the aforementioned four colors (K, C, M, Y) is used (e.g., black ink with greater brightness such as light black, gray), a dot itself can have different brightness by compositing the colors such as black, light black, cyan, magenta, and yellow.

In a case of forming an image by using dots of different sizes, an outline part of an image can also be corrected by changing the sizes of dots at the outline part into sizes smaller than other dots or by adding dots smaller than other dots to a part surrounding the outline part. From a broad (macro) perspective, the part printed with smaller dots will appear to have greater brightness since the area covered by ink is smaller compared to other parts printed with larger dots. Accordingly, an outline correcting effect can be attained. It is also regarded that the different dot sizes also serve to physically reduce the jagged areas.

Furthermore, with a configuration capable of forming more dot sizes, a more suitable outline correction can be achieved owing to more choices of dot sizes and more variations of dot correction patterns. In addition, such configuration can be used in forming character other than black.

Therefore, an image forming apparatus capable of forming dots of various sizes can use both the above-described outline correcting method using different dot sizes (e.g., using dots smaller than other dots as the dots of an outline part our adding dots no larger than the other dots to a part surrounding an outline part) and the above-described outline correcting method using different dot brightnesses (e.g., in a case of black dots, using different kinds of ink to form different dot brightnesses) .

Accordingly, in a case of forming black characters or thin lines, a combination of the outline correcting method using different dot sizes and the outline correcting method using different dot brightnesses can be used whereas in a case of forming characters or thin lines of a color besides black, the outline correcting method using different dot sizes can be used.

In other words, in an image forming apparatus capable of forming dots of different sizes, either one or both of the following method (part) can be used according to the image to be corrected (target image), in which one method (part) is for changing the brightness of at least a single dot situated in an outline part (e.g., outline part of a character or a thin line) or the brightness of at least a single dot added to a part surrounding the outline part to a brightness relatively greater than the brightness of other dots situated in the outline part and the other method (part) is for changing the dot size of at least a single dot situated in an outline part (e.g., outline part of a character or a thin line) or the dot size of at least a single dot added to a part surrounding the outline part. As described below, it is to be noted that the two methods (parts) can be combined as a single method (part) for performing a brightness changing process and a dot size changing process at the same time by using a correction pattern.

Accordingly, by changing dot size and dot brightness, correction can be performed at a higher level and with more variations. In addition, improving character quality by changing dot size and changing dot brightness can reduce the tradeoffs between preventing drying of the nozzle and preventing increase of ink cost. For example, in a case of printing a document mainly of black, although jetting failure due to drying of a color nozzle tends to occur, a process of cleaning the nozzle would reduce printing speed. Meanwhile, in a case of compositing black, ink costs tend to increase (particularly, cost increase unrelated to improvement of image quality). Thus, performing outline correction only by changing dot brightness causes increase of ink cost and ink bleeding. Therefore, by enabling both dot size change and dot brightness change, nozzle drying and ink cost increase can both be prevented.

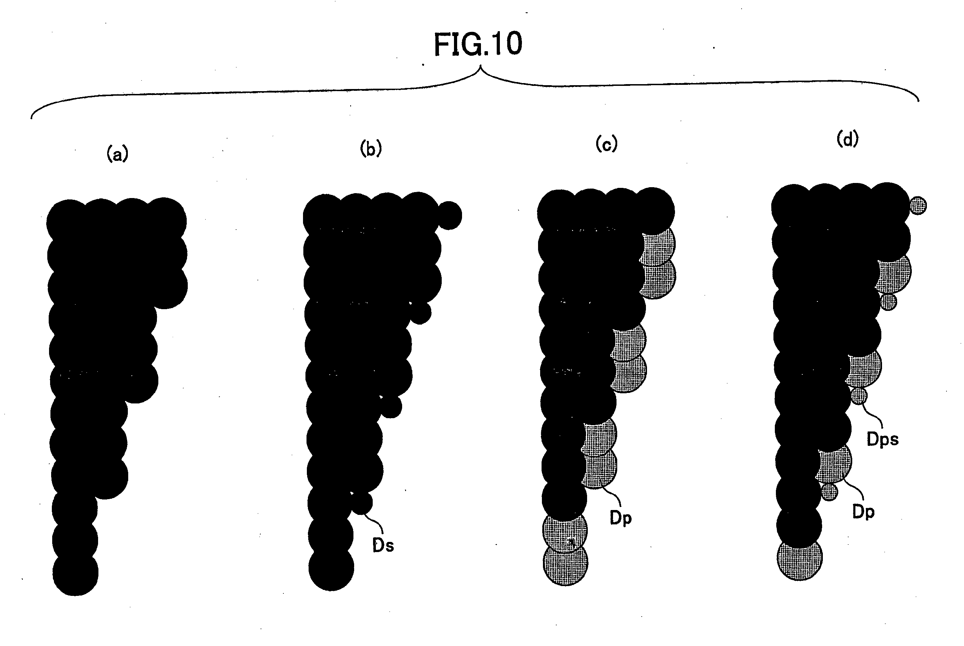

Next, exemplary cases in performing the above-described outline correction are described with reference to Fig.10.

Fig.10(a) shows a case where no outline correction is performed. In Fig. 10 (a), stepwise jagged parts are noticeable at the outline part. Meanwhile, Fig.10(b) shows a case where outline correction is performed by having empty (blank) dots of the dots surrounding the outline part changed into image (printed) dots Ds, that is, changing the empty (blank) dots into dots having a size smaller (or equal) than that of the dots of the outline part. In addition to or as an alternative of the outline correction of Fig.10(b), the dots of the outline part can be changed into dots having a relatively small size. Accordingly, by adding small dots to the outline part, the jagged parts at the outline part become smooth. In a case of an image forming apparatus capable of using dots size, outline correction can be performed in a greater variety of ways. Thus, the image forming apparatus can perform more suitable outline correction. It is to be noted that the number of multi-value or dot formation location, number of dots, sizes of dots are not limited to those described in the embodiments of the present invention, such as in Fig.10(b). Furthermore, this outline correction can be performed not only for black characters but also for color characters.

Fig.10(c) shows a case where outline correction is performed by changing the dots of the outline part into dots Dp having relatively greater brightness than that of the dots of the outline part. The changing of brightness may be performed on the dots to be added to a part surrounding the outline part or on the dots which originally form, in this example, a black character. By using a different brightness for the dots forming a character, the jagged parts at the outline part become less noticeable. Thereby, an outline correction effect can be attained.

Furthermore, by the use of dots with different brightnesses, outline correction can be performed not only with an image forming apparatus capable of forming dots of different sizes but even with an image forming apparatus capable of forming dots of a single dot size. It is to be noted that the number of multi-value or dot formation location, number of dots, sizes of dots, brightness of dots, or the kind of ink used for forming the dots are not limited to those described in the embodiments of the present invention, such as in Fig.10(c).

Fig.10(d) shows a case where outline correction is performed by changing the dots of the outline part into dots Dp having relatively greater brightness than that of the dots of the outline part and also changing (adding) the dots surrounding the outline parts into dots Dps having relatively greater brightness as well as smaller dot size than the other dots of the outline part. In other words, Fig.10(d) shows a case of combining the dot size changing process and dot brightness changing process. Thereby, a more efficient outline correction effect can be attained. The dot brightness changing process may be performed on the dots originally forming, in this example, a black character, the dots to be added to the outline part, or the dots changed into a smaller size. It is to be noted that the number of multi-value or dot formation location, number of dots, sizes of dots, brightness of dots, or the kind of ink used for forming the dots are not limited to those described in the embodiments of the present invention, such as in Fig.10(d).

It is to be noted that the liquid jet head capable of jetting dots of different sizes is not limited to a piezoelectric type head and an electrostatic type head. For example, the liquid jet head may be a thermal type head including nozzles of different diameters or a heater having a non-linear characteristic for controlling heater resistance. The above-described outline correction effect can be attained with an image forming apparatus having any one of the heads.

Accordingly, jagged areas (jaggy) can be hardly noticeable and image quality can be improved by changing the brightness of at least one dot in the dots forming an outline part (for example, an outline part of a character or a linear image) or one dot to be added to a part surrounding the outline part to a brightness relatively greater than that of the other dots forming the outline part.

From another aspect, black characters, in general, are preferred to be formed darkly and clearly for better visibility. However, in a case where there is a significant contrast between the paper and the image (character), the edges at the outline part of the image become emphasized and jagged areas become noticeable. Therefore, in a case of performing outline correction by using dots having different brightnesses, the jagged areas can be reduced without deterioration of visibility by using dots of low brightness for the framework of the character while using dots of higher brightness for the outline part of the character.

For example, in a case of forming a black character with recording liquids of four colors (K, C, M, Y), the density of the black character can be increased by using a composite black ink including the four colors (four color composite black ink) . However, in this case, jagged areas can be reduced without deterioration of visibility by using the four color composite black ink for the framework of the black character while using a single black color (K) ink or a three color composite black ink for the outline part of the black character. Furthermore, the amount of ink consumed can be less compared to using the four color composite black ink.

Furthermore, by detecting the angle of an outline part and changing the dot size changing process and/or the dot brightness changing process (e.g., switching a correction pattern (described in detail below)) according to the detected angle, an optimum outline correction can be realized according to the angle of the outline part. For example, in detecting the angle of the outline part, first, the dots forming the outline part are detected. Then, an outline formed by connecting the detected dots is obtained. Then, the angle of the outline part is calculated by comparing the outline and a predetermined direction (e.g., main scanning direction or sub-scanning direction). Accordingly, a correction pattern corresponding to the calculated angle of the outline part is selected.

Exemplary cases of performing outline correction using correction patterns according to various conditions and factors (e.g., angle of the outline part, etc.) are described below. In the case of performing outline correction according to the angle of the outline part, a correction pattern includes one or more outline pattern data and correction process data corresponding to the outline pattern data. Thus, the outline correction is performed by matching a detected outline pattern and a correction pattern.

Whether jagged areas (jaggy) in the outline part are noticeable may also depend on printing conditions (e.g., resolution, type of paper). Since dot formation location can be specified in detail in a case of high resolution printing, jaggy in the outline part is less noticeable. Therefore, in a case where sufficient resolution can be obtained, outline correction might not be required.

Furthermore, with respect to types of paper, dots tend to blur when plain paper is used. Meanwhile, when glossy paper is used, the shapes of dots clearly appear and the density of the paper surface is uniform. Therefore, the edges tend to appear and jaggy is noticeable.

Therefore, it is determined whether it is necessary to perform the outline detection and outline correction depends on printing conditions (e.g., resolution, type of paper) and performing outline correction; when it is determined to be necessary, with a correction pattern based on the printing conditions, an optimum outline correction can be performed without unnecessary data processing.

Since the outline correction method according to an embodiment of the present invention is applicable to characters and thin line images, the calculation workload performed for the outline correction method can be reduced by obtaining object data of the image to be printed (e.g., text data, photograph data, graphic data, thin line data) and performing the outline detection process and the outline correction process on character data and thin line data only.

Furthermore, as for other printing conditions (factors) of an liquid jet type image forming apparatus, jetting failure (e.g., broken (missing) line patterns, or bent line patterns) tend to occur as ink becomes dry and the viscosity of the ink increases. Particularly, in a case where the image forming apparatus is used under a low temperature and/or low humidity environment or a case where the image forming apparatus has not been used for a long period, such problems are liable to occur.

Furthermore, as for other printing conditions, when printing image data (e.g., printing an image consisting of mostly black characters but with a part expressed with color characters) in a case where a certain ink (e.g., black) is frequently used while other color inks are not often used, the low usage rate of the other color inks may cause jetting failure and may skip (miss) printing the color character part.

In order to prevent the above-described jetting failures, the nozzle face is cleaned and blank (empty) ink jetting is performed. However, these processes reduce printing throughput and unnecessarily consume ink. Furthermore, although color inks may be used by printing a black character part with composite black ink for preventing the jetting failure, this leads to an increase in the amount of ink consumption and the appearance of jagged areas due to an increase of density of the characters. More specifically, in a case where a composite black of four colors (K, C, M, Y) is used, jagged areas will clearly appear due to increased density of the characters. In a case where a composite black of three colors (C, M, Y) is used, visibility of the characters is reduced due to reduced density of the characters.

By referring to object data of image data to be printed (target image data) or color component data calculated from the target image data, an optimum outline correction can be performed from the aspect of steady nozzle jetting performance and suitable ink consumption based on the object data and the color component data. That is, a correction pattern can be selected from the aspect of attaining a balanced usage of ink, for example, by selecting a correction pattern using a large amount of color ink in a case of printing an image consisting mostly of characters/thin lines where the color ink usage rate is low or by switching to a correction pattern that controls the consumption of each ink to a predetermined amount based on color component data.

In a case of performing an outline correction using the dot size changing process where the target image data includes characters of a color other than black, suitable outline correction can be performed by changing the correction patterns based on color component data. For example, since jagged areas are more noticeable when using colors as black, cyan, and magenta at an outline part compared to using a color such as yellow, the correction pattern can be changed based on color component data so that optimum outline correction can be achieved.

Furthermore, correction patterns may also be switched according to status data of the image forming apparatus (e.g., ambient temperature or humidity of the image forming apparatus, lapsed time from previous use of the image forming apparatus). For example, under conditions where jetting failure tends to occur (e.g., low temperature, low humidity, long unused period), it is preferable to select a correction pattern that can use various inks in a balanced manner for attaining steady jetting performance. For example, under conditions where it is difficult for ink to dry (e.g., high temperature, high humidity) it is preferable to select a correction pattern that can reduce ink consumption for preventing problems such as cockling and bleeding.

Furthermore, in a case where the image forming apparatus is capable of forming dots of multiple sizes (multi-value dot size), ambient conditions may cause jetting failure to occur for a particular size droplet (e.g., small droplet), to thereby degrade image quality. Therefore, by switching the correction pattern and changing the combination of dot sizes, degrading of image quality due to jetting failure can be prevented.

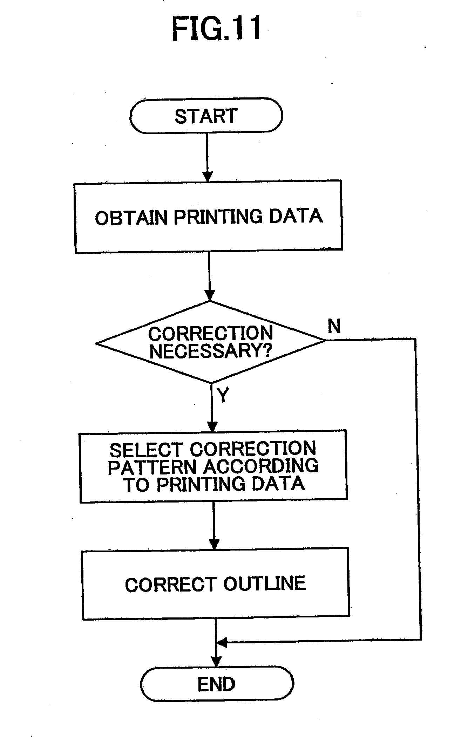

Next, an exemplary outline correction operation (method) is described with reference to Fig. 11. This outline correction operation is executed by having a CPU 201 execute a program stored in a ROM 202.

In the outline correction operation, first, printing data are obtained. For example, the printing data include printing mode (resolution, type of paper), image data (e.g., color component data, object data), and status data of the image forming apparatus (e.g., ambient data). Then, the CPU 201 determines whether outline correction is necessary based on the obtained printing data.

In a case where outline correction is determined unnecessary (e.g., sufficient high resolution, no character/thin line to be printed), outline correction is not performed.

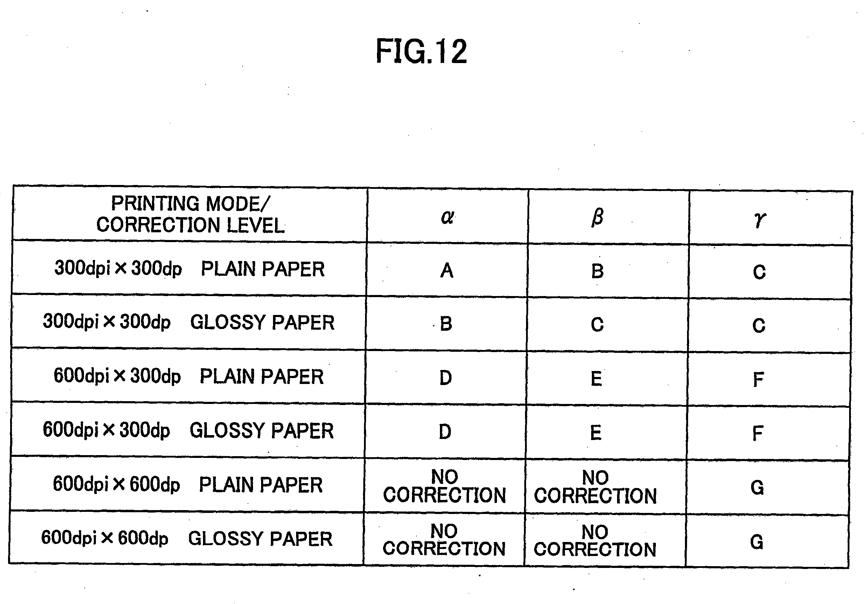

In a case where outline correction is determined necessary, the CPU 201 selects a correction pattern to be used based on a table as shown in Fig. 12. It is to be noted that the table shown in Fig.12 is merely an example. Thus, the choices of patterns or the number of patterns is not limited to those shown in Fig.12.

Since the optimum correction process differs depending on, for example, resolution and type of paper, the correction pattern is different according to resolution and type of paper. Furthermore, even if the resolution or the type of paper is the same, it may be desirable to switch the correction pattern according to the ambient conditions of the image forming apparatus or data configuration of the image data. For example, a correction pattern that increases the usage rate of C, M, Y may be selected for preventing nozzle failure. In another example, a correction pattern that controls ink consumption may be selected for reducing ink cost. Furthermore, in a case where the image forming apparatus is capable of forming dots of multiple sizes, a combination of the dot size changing process and the dot brightness changing process may be used when correcting black characters and the dot size changing process may be used when correcting color characters. Thus, different correction patterns are assigned to various correction levels which are determined (defined) by calculating various printing data.

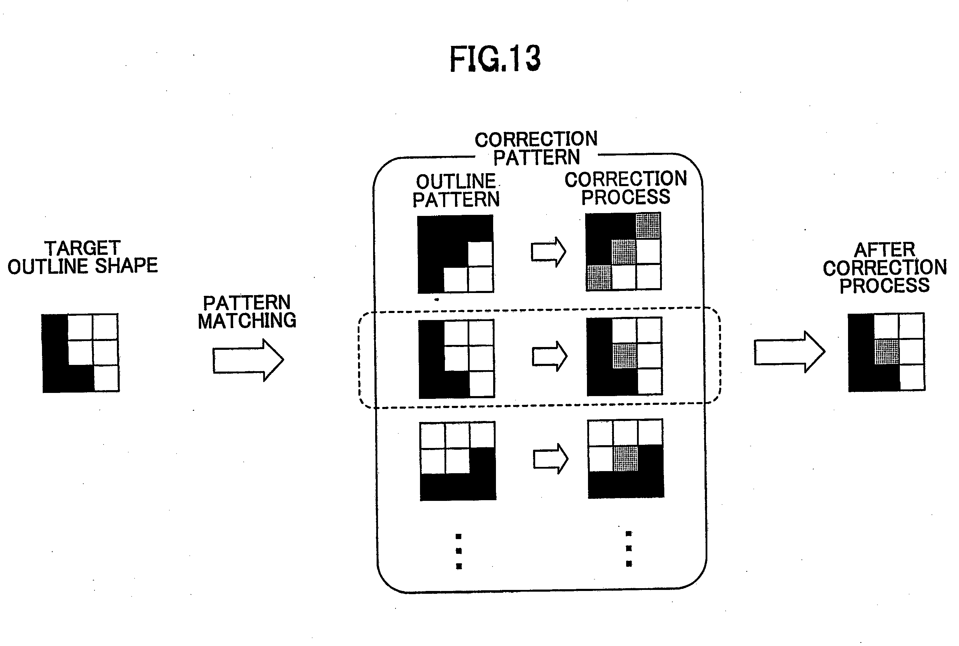

As shown in Fig. 13, each correction pattern includes plural outline patterns and dot arrangement data (e.g., dot formation location, number of dots, dot size, type of ink) corresponding to the outline patterns. The CPU 201 performs a pattern matching process on the shape (pattern) of a detected outline part and the outline patterns included in the correction pattern. The CPU 201 performs outline correction on the detected outline part by using a matching outline pattern in the correction pattern.

More specifically, in performing the outline correction process based on the printing data according to an embodiment of the present invention, the CPU 201 selects a correction pattern from the table shown in Fig.12 and performs outline correction on the detected outline part by using a corresponding outline pattern of the selected correction pattern. For example, an outline pattern having an angle corresponding to that of the detected outline part may be used in the outline correction process.

In an exemplary table shown in Fig. 12, the correction levels (correction rank) *α, β, γ are* defined (categorized) according to ambient conditions of the image forming apparatus and/or configuration (constitution) of the image data. Each correction level is assigned with correction patterns A through G according to printing mode. For example, in a case where the correction levels *α*, *β*, *γ* are categorized according to ambient temperature (*α* indicating low temperature, *β* indicating medium temperature, *γ* indicating high temperature), a correction pattern A that can use various inks in a balanced manner can be assigned for correction level α (i.e. using C, M, and Y inks for increasing brightness rather than using K ink only in a low. temperature condition). Meanwhile, a correction pattern C that that can reduce ink consumption can be assigned for correction level *γ* (i.e. using one type of ink rather than using C, M, Y inks).

For example, in a case where the correction levels *α*, *β*, *γ* are categorized according to the data configuration of the image data (a indicating small proportion of black color data, *β* indicating medium proportion of black color data, *γ* indicating large proportion of black color data), a correction pattern A having high C, M, Y usage rates can be assigned for correction level α (i.e. using C, M, and Y inks for increasing brightness instead of using K ink only when the proportion of black color data in the image data is small). Meanwhile, a correction pattern C having low C, M, Y usage rates can be assigned for correction level *γ*. It is to be noted that the categorization of the correction level or the number of correction levels is not to be limited to those described above.

Furthermore, in a case of forming black characters or black thin lines, the timing for jetting liquid droplets of one or more colors can be different with respect to those of other colors. For example, in a case of performing outline correction with a configuration capable of jetting four colors of K, C, M, Y, the timing for jetting K color ink can be different from the timing for jetting C, M, Y color inks. This allows outline correcting dots to be formed at areas where a satisfactory outline correction effect can be attained. It is to be noted that various head configurations can be used (e.g., a configuration having a head corresponding to each color, a configuration having one head for K ink and another head for C, M, Y ink, and a configuration having a head with plural nozzle arrays).

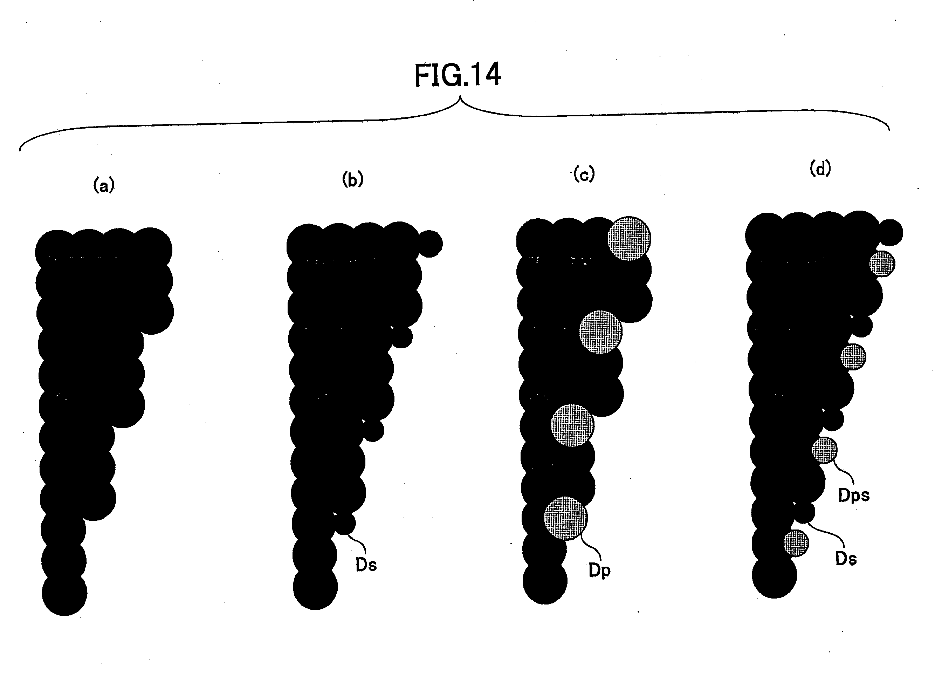

Fig.14 shows exemplary cases where droplets are jetted at different timings. Fig.14(a) shows a case where no outline correction is performed. In Fig. 14 (a), jagged areas are noticeable at the outline part. Fig.14(b) shows a case where outline correction is performed by adding small dots Ds to the outline part. However, since the kinds of dot sizes are limited and dot formation locations are defined by resolution, the outline correction effect is still insufficient. In Fig. 14 (c), the dot formation locations of a portion of the dots D are shifted (deviated) a half pitch of the resolution with respect to the dot formation locations of the other dots (in this example, the dots are shifted in a main scanning direction which perpendicularly intersects the nozzle array direction). Accordingly, the outline correcting dots can be formed in areas where greater outline correction effect can be attained. In addition to the outline correction effect (smoothing effect) using a different brightness at the outline part, the dots also serve to physically cover the jagged areas. The example shown in Fig. 14 (c) can be executed not only by an image forming apparatus capable of forming multi-value dot patterns but also by an image forming apparatus capable of forming binary dot patterns. Thus, depending on the selected recording head, the correction process of using different dot brightnesses can be used in combination.

As shown in Fig.14(d), an image forming apparatus capable of forming multi-value dot patterns can perform a combination of changing dot size and changing dot formation location. Thus, depending on the selected recording head, the correction process of using different dot brightnesses can be used in combination.

It is to be noted that the outline correction processes described with Fig. 14 may be performed with a recording head, dot formation location, number of dots, dot size, and ink other than those described above. In changing the timing for jetting the ink, a recording head having drive waveforms of different rise timings may be used for selectively applying the drive waveform to the recording head.

Although the above-described embodiments of the present invention are described with a serial type image forming apparatus, the present invention may also be effectively applied to a line type image forming apparatus.

In the line type image forming apparatus, nozzle are arranged substantially across the entire paper in the paper width direction. Furthermore, the line type image forming apparatus performs recording (printing) by conveying the paper instead of scanning in the width direction. Therefore, the line type image forming apparatus is only capable of using the interlace method and the multi-pass method. This makes it difficult for the line type image forming apparatus to increase image forming (printing) resolution. Accordingly, the problem of jaggy may be more serious for the line type image forming apparatus compared to the serial type image forming apparatus.

Furthermore, since the line type image forming apparatus performs recording by conveying paper with respect to an affixed recording head, it is difficult to perform a head cleaning process and a blank jetting process with the line type image forming apparatus. Furthermore, since the line type image forming apparatus has a longer recording head than that of the serial image forming apparatus, a greater amount of ink is used in the cleaning process and the blank jetting process.

Therefore, the difficulties of outline correction, steady jetting performance, and ink consumption also apply to the line type image forming apparatus. Therefore, the present invention is also effective for the line type image forming apparatus.

The above-described program according to an embodiment of the present invention may be installed in a computer-readable recording medium 500 for enabling an image forming apparatus including a CPU (computer) 201 to perform the outline correction operation (method), to thereby eliminate jaggy and improve image quality.

Although the above-described image forming apparatus is explained having a configuration of a printer, the present invention may also be applied to an image forming apparatus having a configuration of a facsimile machine, a plotting apparatus, a copier, or a multifunction machine having the functions of a printer, a facsimile, and a copier, for example.

### [Second Example]

Next, another exemplary operation of performing outline correction of an image with the above-described image forming apparatus is described.

As described above, in a case of jetting liquid droplets of different dot diameters by applying drive pulses of different widths or different numbers of drive pulses to the recording head 7, even if the timing of the start of the rise of the meniscus is the same upon input of the drive pulse, the timing for jetting liquid droplets upon the end of the drive pulse is different. Therefore, the time for the droplets to reach the medium surface is different. As a result, the dot formation position on the paper is different depending on dot size.

Furthermore, since the viscosity resistance of ink changes according to ambient temperature and ambient humidity, the meniscus may not be appropriately controlled even if a drive pulse is applied to the recording head 7. This results in deviation of dot impact position. The ambient conditions also make it difficult to maintain suitable dot size and dot shape. This is also results to deviation of dot impact position. Furthermore, in a case where the image forming apparatus 1000 is not used for a long period of time, dried ink may accumulate surrounding of the nozzle. Moreover, in a case where the image forming apparatus 1000 has been used for a long period of time since the manufacture of the image forming apparatus 1000, changes in the characteristics of its recording head 7 may affect liquid jet precision and lead to deviation of dot formation position.

Although an example of a piezoelectric type recording head is used for describing the problem of dot formation position, this problem may also occur in a case of using a thermal type recording head or an electrostatic type recording head (a head using electrostatic force between a vibration plate and an electrode facing the vibration plate for applying pressure to a liquid chamber via the vibration plate) as the recording head 7. For example, the present invention may be applied to a case of using a thermal type recording head which forms multi-value dot patterns by controlling the resistance value of its thermoelectric transducer.

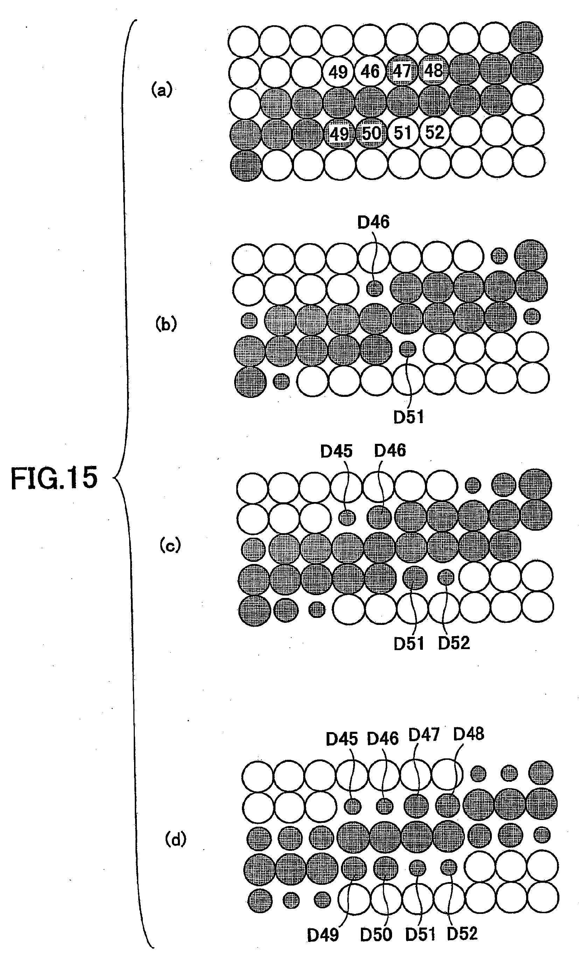

Next, exemplary cases in performing the above-described outline correction are described with reference to Fig.15.

Fig.15(a) shows a case where no outline correction is performed. As shown in Fig. 15 (a), satisfactory image quality cannot be attained and stepwise jagged parts are noticeable at the outline part in a case where resolution is not high enough. Accordingly, by replacing the dots at the parts surrounding the outline part with other dots, the jagged areas can be reduced.

For example, Fig. 15 (b) shows a case where one blank dot situated in the stepwise part of the outline part is replaced with a small size image dot (addition of dots). Fig.15 (c) shows a case where two blank dots situated in the stepwise part of the outline part are replaced with one small size image dot and another medium size image dot (addition of dots). Fig. 15 (d) shows a case where two more dots situated in the stepwise part of the outline part are replaced with another small size image dot and another medium size image dot in addition to those of Fig.15 (c).

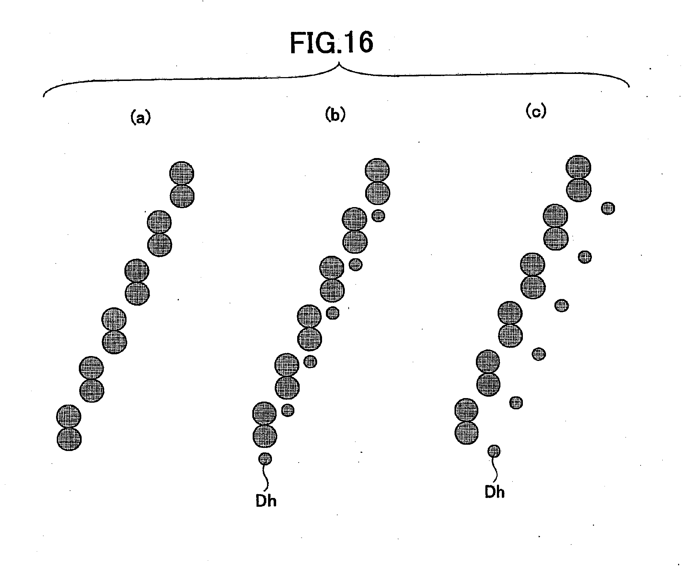

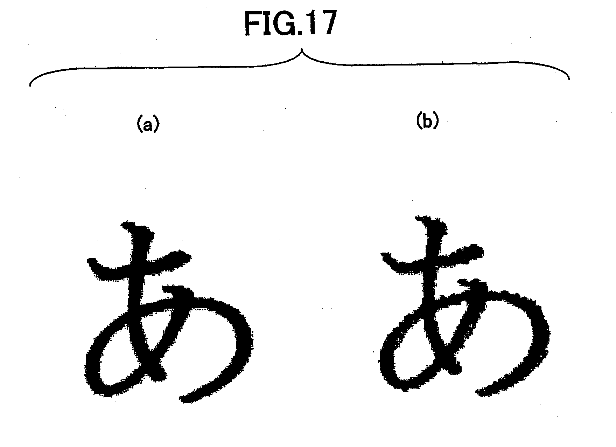

However, as described above, in a case where there is a deviation of dot formation position, the above-described outline correction process may adversely affect image quality. For example, in a case of performing the outline correction by adding dot Dh (see Fig.16(b)) for reducing jaggy in the outline part shown in Fig. 16 (a), deviation of dot formation position (see Fig.16 (c)) may cause undesired overlapped or blurred areas, to thereby degrade image quality. More specifically, as shown in Fig.17 (a) and 17(b), the roughness at the outline part of the character in Fig.17(b) is significantly noticeable compared to that of Fig.17(a).

Accordingly, the present invention selectively changes the method (pattern) for replacing a target dot with another dot having, for example, different dot size and/or brightness with respect to the target dot by referring to factors (e.g., ambient temperature, ambient humidity, lapsed time from manufacture, lapsed time from previous image forming process) that cause deviation of dot formation position (dot impact position) or by referring to the actual amount (degree) by which the dots deviate from a desired dot formation position on the paper (medium), so as not to use a deviated dot(s) that would adversely affect image quality. For example, the method (pattern) of replacing dots can be changed by selectively changing a correction pattern for maintaining image quality of an output image (described in detail below).

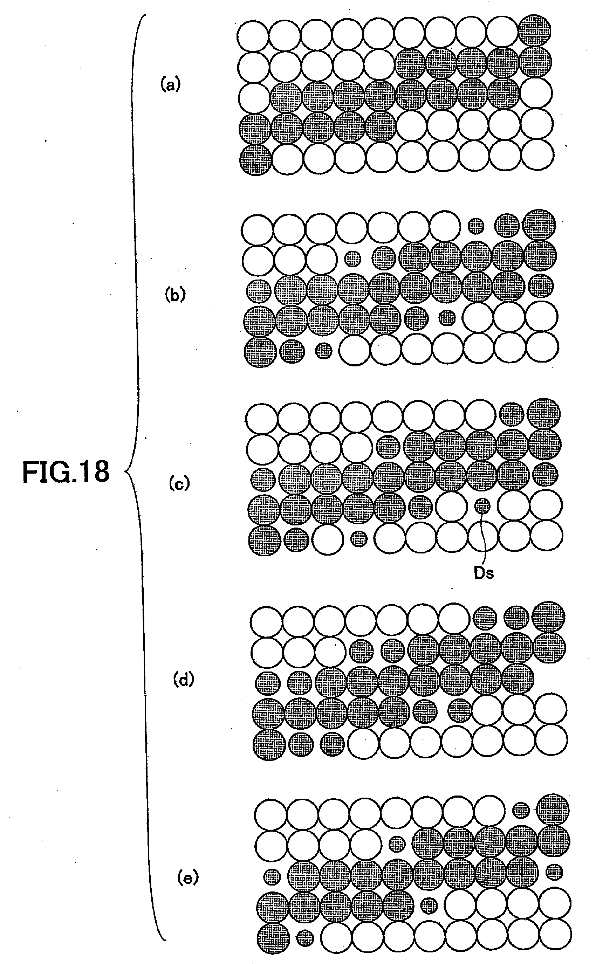

The same as Fig.15(a), Fig.18(a) shows a case where no outline correction is performed. Likewise, jagged areas are noticeable at the outline part. Accordingly, as shown in Fig.18(b), an outline correction process using different size droplets (medium droplet and small droplet : medium dot and small dot) is performed. In this case, when deviation of a droplet impact position occurs (e.g., deviation of small droplet impact position), the dot corresponding to the deviated droplet deviates from its target dot formation position (small dot Ds deviating one dot from target dot formation position in Fig.18(c)). Thus, in addition to not being able to attain a satisfactory outline correction effect, such deviation causes degrading of image quality such as creation of overlapped lines, mist, and blurring.

In a case where there is a significant deviation of a small droplet impact location, a correction pattern which uses only medium droplets (no small droplets) can be selected as the correction pattern for performing the outline correction process (See Fig. 18 (d)). Likewise, in a case where there is a significant deviation of a medium droplet impact location, a correction pattern which uses only small droplets (no medium droplets) can be selected as the correction pattern for performing the outline correction process (See Fig. 18 (e)). Thus, an optimum correction pattern can be used in the outline correction process (dot replacement process) according to the deviation status (or the cause of deviation). It is to be noted that the types of droplets, droplet sizes (large, medium, small), or correction pattern are not limited to those described with Fig.18.

Next, factors causing deviation of dot formation position, how the factors are detected, and how the factors are input are described.

As described above, the factors causing deviation of dot formation position may be, for example, ambient temperature, ambient humidity, elapsed time from the time of manufacture of the image forming apparatus, and elapsed time from the previous time of performing an image forming process. Accordingly, the factors can be detected by providing the image forming apparatus 1000 with a part for detecting the ambient temperature, ambient humidity (e.g., temperature sensor 215) and a part for counting the time elapsed from the time of manufacturing the image forming apparatus or the previous time of performing an image forming process and updating the factors by storing them in a non-volatile memory (RAM) 204 of the control part 200.

Furthermore, the actual amount (degree) of a dot deviating from a target dot formation position on a medium may also be detected. For example, in detecting the actual amount of dot formation position deviation, first, a dot pattern enabling detection of the amount of deviation from the dot formation position during an actual image forming process (e.g., a ruled pattern formed with different size dots) is printed (output) on a medium. Then, dot formation data (impact precision data), density data, and brightness data are obtained by reading the printed dot pattern with, for example, a photo-sensor or a scanning unit. Then, the CPU 201 calculates how much a dot (s) is deviated from a target dot formation position (deviation amount) based on the obtained data.

Alternatively, in a case where the configuration for detecting the actual deviation amount becomes too complicated, the user may input data related to the deviation amount. Likewise, a dot pattern enabling detection of the amount of deviation from the dot formation position during an actual image forming process is printed (output) on a medium. Then, the user determines the deviation amount by examining the output dot pattern and inputs data related to the determined deviation amount. For example, the user has the deviation amount divided into multiple levels (first level to n level) beforehand. Then, the user determines the level to which the output dot pattern belongs. Then, the user inputs data (e.g., numeral) corresponding to the determined level via the control panel 214.

Next, a relationship between dot formation position deviation and resolution and a relationship between medium type (paper type) and image quality are described.

As described above, in general, correction of the outline part (particularly, the stepwise part of the outline part) of an image is required in a case where resolution is low. Meanwhile, in a case of high resolution, correction of the outline part of an image may not be required since a substantially satisfactory image quality can be attained. Furthermore, jagged areas become more noticeable at the stepwise part as resolution becomes lower. Therefore, it is preferable to change the method of correcting the outline part (method of dot replacement) according to the resolution of the image to be formed.

Furthermore, deviation of dot formation position becomes more noticeable (thereby, regarded as having poor image quality) in a case of a type of medium having less liquid bleeding (blurring) characteristics. For example, even if the deviation amount of the dot formation position is the same, impact deviation has a direct influence on image quality in a case of using glossy paper. This is because glossy paper has high contrast and exhibits little blurring of impact droplets. Therefore, it is preferable to change the method of correcting the outline part (method of dot replacement) according to the type to medium.

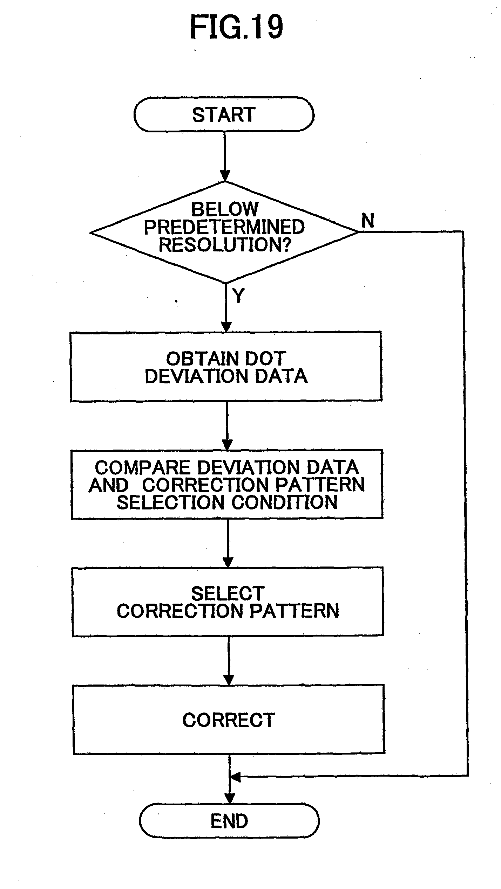

Next, in view of the above, an exemplary outline correction operation (method) is described with reference to the flowchart of Fig.19. This outline correction operation is executed by having a CPU 201 execute a program stored in a ROM 202.

In this outline correction operation (method), a correction pattern is prepared beforehand for performing pattern matching with respect to an outline part of an image. Then, in a case where there is a match between the outline part of an image and the correction pattern as a result of the pattern matching process, outline correction is performed by replacing a dot(s) surrounding a stepwise part of the outline with a dot(s) having a size designated by the matching correction pattern. It is to be noted that the outline correction process performed by dot replacement includes replacing a blank dot with an image dot and modifying the size of the image dot.

More specifically, in the outline correction process, first, the CPU 201 determines whether the resolution of the printing mode is no greater than a predetermined resolution for determining whether correction of the outline part is necessary. As described above, in a case where printing resolution is high enough that jagged areas are hardly noticeable, the CPU 201 does not need to execute the outline correction process. As an alternative of or in addition to the step of determining the resolution, a step of determining the type of medium can be performed for determining whether the outline correction process is necessary.

In a case where the outline correction process is determined necessary, the factors that cause dot formation position deviation (hereinafter also referred to as "dot deviation data") are obtained. As described above, the dot deviation data may include ambient temperature, ambient humidity, elapsed time from time of manufacturing the image forming apparatus, elapsed time from previous time of executing an image forming process, actual deviation amount based on an output dot pattern, or data related to the deviation amount input by the user.

Then, the obtained dot deviation data are compared with a selection condition (s) for selecting a correction pattern including predetermined resolution data (or medium type data). Then, a correction pattern is selected based on the comparison result. Then, an outline correction process is executed by using the selected correction pattern. It is to be noted that, the outline correction process (dot replacement process) may not be executed in a case where there is no correction pattern that satisfies the selection condition.

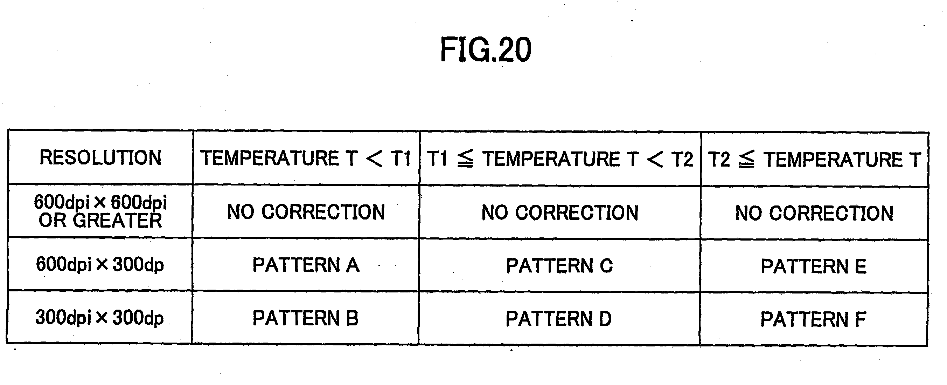

For example, as exemplarily shown in the table of Fig. 20, a correction pattern can be selected based on a combination of resolution and ambient temperature. More specifically, in this example, outline correction is not performed regardless of the ambient temperature when the resolution is equal to or greater than 600 dpi X 600 dpi. Furthermore, pattern A or B is selected according to resolution when the temperature T is less than a predetermined temperature T1. Furthermore, pattern C or D is selected according to resolution when the temperature T is no less than the predetermined temperature T1 but less than a predetermined temperature T2. Furthermore, pattern E or F is selected according to resolution when the temperature T is no less than the predetermined temperature T2.

Generally, in terms of ambient temperature, ink viscosity tends to increase and jetting failure of small droplets tends to occur when the ambient temperature of the image forming apparatus 1000 is low. Therefore, it is preferable to select a correction pattern that does not use small droplets or a correction pattern having a reduced small droplet usage rate (Pattern A, B). In a case of normal temperature, jetting failure hardly occurs. Therefore, a correction pattern using every type (size) of dot can be selected (Pattern C, D). In a case of high temperature, problems such as decrease of ink viscosity, increase of ink consumption, increase of jetting speed, scattering of ink in a mist-like manner upon impact, or trailing dots upon impact tend to occur. Therefore, a correction pattern using droplets which do not cause such problems or a correction pattern using less ink can be selected Pattern E, F) . In addition, a further preferable correction pattern can be selected according to printing conditions (e.g., resolution, type of medium).

It is to be noted that a correction pattern can be selected based on the deviation amount of dot formation position and/or factors that cause deviation of dot formation position. Initially, correction patterns that cause little deviation according to various printing conditions (e.g., resolution, type of paper) are prepared first hand. However, in a case where a dot of a certain size may cause unsatisfactory correction results, a correction pattern using dots of the certain size is avoided and an alternative correction pattern is selected (a correction pattern having the most effective correction performance without using dots of the certain size). In a case where an effective correction effect is unlikely to be attained by selecting any one of the correction patterns, a correction pattern which performs no outline correction may be selected.

Although one example of changing the method of correction is described as changing the correction pattern by preparing multiple correction patterns corresponding to factors that cause dot formation position deviation and selecting a correction pattern based on the detection results of the factors, other examples of changing the correction method may be used. For example, instead of changing the correction pattern, the size of the dots for performing dot replacement can be changed by comparing the factors with a predetermined condition(s) according to a pattern matching result.

Hence, by providing a part for changing the method of replacing the dots forming an outline part of an image based on factors that affect dot formation position or the amount of deviation from a dot formation position on a medium (detection data or data input from outside), the method of the dot replacement (correction method) can be changed when dot formation position deviation occurs so that outline correction can be performed without being adversely affected by the dot formation position deviation. Thereby, image quality can be prevented from degrading.

Furthermore, by providing a program enabling a computer to execute a process for changing the method of replacing the dots forming an outline part of an image based on factors that affect dot formation position or the amount of deviation from a dot formation position on a medium (detection data or data input from outside), the method of the dot replacement (correction method) can be changed when dot formation position deviation occurs so that outline correction can be performed without being adversely affected by the dot formation position deviation. Thereby, image quality can be prevented from degrading.

Furthermore, by installing the program on a computer-readable recording medium 500, a program enabling the method of the dot replacement (correction method) to be changed when dot formation position deviation occurs can be provided so that outline correction can be performed without being adversely affected by the dot formation position deviation. Thereby, image quality can be prevented from degrading.

Furthermore, by providing an image forming method for changing the method of replacing the dots forming an outline part of an image based on factors that affect dot formation position or the amount of deviation from a dot formation position on a medium (detection data or data input from outside), the method of the dot replacement (correction method) can be changed when dot formation position deviation occurs so that outline correction can be performed without being adversely affected by the dot formation position deviation. Thereby, image quality can be prevented from degrading.

It is to be noted that the image forming apparatus 1000 according to an embodiment of the present invention may include a function to display the status of the image forming apparatus 1000 or a method of improving the image forming apparatus 1000 to the user or administrator of the image forming apparatus 1000 via an apparatus (e.g., display apparatus, host computer (data processing apparatus)) connected to the image forming apparatus 1000 based on various data such as temperature, humidity, and dot impact data (data related to deviation of dot formation position).

For example, in a case where an effective outline correction performance (e.g., jaggy reduction effect) cannot be realized even by applying the correction patterns stored beforehand in the image forming apparatus 1000 due to temperature, humidity, dot impact data (data related to deviation of dot formation position), or other factors that cause deviation of dot formation position, the image forming apparatus 1000 may be informed with data related to the inability to realize an effective correction performance via the control panel 214 of the image forming apparatus 1000 or a printer driver of a data processing apparatus on the host side.

For example, the data related to the inability to realize an effective correction performance may include data notifying that the image forming apparatus 1000 is in such state, data indicating ambient/printing conditions (ambient temperature, ambient humidity, resolution, deviation amount), data indicating the status of the image forming apparatus 1000, data including information for improving the performance of the image forming apparatus 1000 such as messages advising change of ambient/printing conditions, maintenance information (e.g., head cleaning, head adjustment), and help/support service information.

With the above-described display function, the user can be informed (persuaded) to adjust various settings and ambient conditions and perform other adjustment (e.g., calibration) for improving the performance of the image forming apparatus 1000 including elimination of dot formation position deviation according to various conditions.

The image forming apparatus 1000 may also include a function to report the above-described data related to the inability to realize an effective correction performance to a support service of the image forming apparatus 1000.

With the reporting function, the support service can promptly and automatically detect failure of the image forming apparatus 1000.

Thus, owing to the above-described functions, not only can the image forming apparatus 1000 achieve optimum outline correction according to various conditions but can also receive various support for maintaining satisfactory performance.

Although the above-described image forming apparatus is explained having a configuration of a printer, the present invention may also be applied to an image forming apparatus having a configuration of a facsimile machine, a plotting apparatus, a copier, or a multifunction machine having the functions of a printer, a facsimile, and a copier, for example.

In the above-described embodiments of the present invention, a dot (pixel) of an image is not limited to a dot (pixel) that is formed by a single type of recording liquid (ink). That is, a dot of an image may be formed by forming plural types of recording liquid (ink) to a single position. Therefore, a dot (pixel) can be formed by jetting one or more droplets to a single position on a medium. Furthermore, in the above-described embodiments of the present invention, unless described as otherwise, brightness (dot brightness) refers to the brightness that is defined by a dot itself. That is, brightness does not include brightness of a covered area when viewed from a broad (macro) perspective unless described as otherwise. Furthermore, in the above-described embodiments of the present invention, a character may be a letter, a symbol, or a thin line. For example, a black character may include a thin black line. Furthermore, in the above-described embodiments of the present invention, the term "change" may include not only the meaning "change" but also a meaning "replace", "correct", or "correct". Furthermore, in the above-described embodiments of the present invention, among the dots that form an outline part, the dots which are not corrected (e.g., corrected by change of dot brightness) may be described as other dots forming an outline part, other dots of an outline part, or other dots situated in an outline part.

Further, the present invention is not limited to these embodiments, but variations and modifications may be made without departing from the scope of the present invention.

The present application is based on Japanese Priority Application Nos.2006-252046 and 2006-252053 both filed on September 19, 2006, with the Japanese Patent Office.

## Claims

1. An image forming apparatus (1000) for forming an image on a medium by jetting one or more droplets on the medium, the image forming apparatus (1000) comprising:
a dot brightness changing part (201) for a changing a dot brightness of at least one target dot forming an outline part of the image to a brightness relatively greater than the dot brightness of other dots forming the outline part; and
a dot size changing part (201) for changing a dot size of at least the target dot forming the outline part of the image to a dot size different from the dot size of the other dots forming the outline part, **characterized in that**:
at least one of the dot brightness and the dot size of the target dot is changed according to the color of the image by the dot brightness changing part (201) and the dot size changing part (201).

2. An image forming process for forming an image on a medium by jetting one or more droplets on the medium, the process comprising the steps of:
changing a dot brightness of at least one target dot forming an outline part of the image to a brightness relatively greater than the dot brightness of other dots forming the outline part; and
changing a dot size of at least the target dot forming the outline part of the image to a dot size different from the dot size of the other dots forming the outline part, **characterized in that**:
at least one of the dot brightness and the dot size of the target dot is changed according to the color of the image.

3. A computer program comprising program code means for causing a computer to control an image forming apparatus to execute an image forming process according to claim 2.

## Patentansprüche

1. Bilderzeugungsvorrichtung (1000) zum Ausbilden eines Bildes auf einem Medium, indem ein oder mehrere Tröpfchen auf das Medium ausgestoßen werden, wobei die Bilderzeugungsvorrichtung (1000) aufweist:
ein Punkthelligkeitsänderungsteil (201) zum Ändern einer Punkthelligkeit von zumindest einem Zielpunkt, der einen Außenlinienteil des Bildes zu bzw. mit einer Helligkeit ausbildet, die relativ größer als die Punkthelligkeit der anderen Punkte ist, die den Außenlinienteil ausbilden; und
einen Punktgrößenänderungsteil (201) zum Ändern einer Punktgröße von zumindest dem Zielpunkt, der den Außenlinienteil des Bildes ausbildet, und zwar zu bzw. mit einer Punktgröße, die unterschiedlich von der Punktgröße der anderen Punkte ist, die den Außenlinienteil ausbilden, **gekennzeichnet durch**:
zumindest eines der Punkthelligkeit und der Punktgröße des Zielpunktes ist bzw. wird entsprechend der Farbe des Bildes geändert, und zwar **durch** den Punkthelligkeitsteil (201) und den Punktgrößenänderungsteil (201).

2. Bildausbildungsprozess zum Ausbilden eines Bildes auf einem Medium, indem ein oder mehrere Tröpfchen auf das Medium ausgestoßen werden, wobei der Prozess die folgenden Schritte aufweist:
Änderung einer Punkthelligkeit von zumindest einem Zielpunkt, der einen Außenlinienteil des Bildes ausbildet, und zwar zu bzw. mit einer Helligkeit, die relativ größer ist als die Punkthelligkeit der anderen Punkte, die den Außenlinienteil ausbilden; und
Änderung einer Punktgröße von zumindest dem Zielpunkt, der den Außenlinienteil des Bildes ausbildet, und zwar zu bzw. mit einer Punktgröße, die unterschiedlich von der Punktgröße der anderen Punkte ist, die den Außenlinienteil ausbilden, **gekennzeichnet durch**:
zumindest eines von der Punkthelligkeit und der Punktgröße des Zielpunktes ist bzw. wird entsprechend der Farbe des Bildes geändert.

3. Computerprogramm, das Programmcodemittel aufweist, um zu bewirken, dass ein Computer eine Bildausbildungsvorrichtung steuert, um einen Bildausbildungsprozess nach Anspruch 2 auszuführen.

## Revendications

1. Appareil de formation d'image (1000) pour former une image sur un support en pulvérisant une ou plusieurs gouttes sur le support, l'appareil de formation d'image (1000) comprenant :
une partie de changement de brillance de point (201) pour faire passer une brillance de point d'au moins un point cible formant une partie d'ébauche de l'image à une brillance relativement supérieure à la brillance de point des autres points formant la partie d'ébauche ; et
une partie de changement de taille de point (201) pour faire passer une taille de point d'au moins le point cible formant la partie d'ébauche de l'image à une taille de point différente de la taille de point des autres points formant la partie d'ébauche, **caractérisé en ce que** :
au moins l'une parmi la brillance de point et la taille de point du point cible est modifiée selon la couleur de l'image par la partie de changement de brillance de point (201) et la partie de changement de taille de point (201).

2. Procédé de formation d'image pour former une image sur un support en pulvérisant une ou plusieurs gouttes sur le support, le procédé comprenant les étapes consistant à :
faire passer une brillance de point d'au moins un point cible formant une partie d'ébauche de l'image à une brillance relativement supérieure à la brillance de point des autres points formant la partie d'ébauche ; et
faire passer une taille de point d'au moins le point cible formant la partie d'ébauche de l'image à une taille de point différente de la taille de point des autres points formant la partie d'ébauche, **caractérisé en ce que** :
au moins l'une parmi la brillance de point et la taille de point du point cible est modifiée selon la couleur de l'image.

3. Programme informatique comprenant des moyens de code de programme afin d'amener un ordinateur à commander un appareil de formation d'image pour exécuter un procédé de formation d'image selon la revendication 2.
